(19) Europäisches Patentamt

European Patent Office

Office européen des brevets

(11) **EP 1 071 084 A2**

(12) **EUROPEAN PATENT APPLICATION**

(43) Date of publication:
**24.01.2001 Bulletin 2001/04**

(51) Int. Cl.[7]: **G11B 7/12**, G11B 7/13,
G11B 7/135

(21) Application number: **00115597.7**

(22) Date of filing: **19.07.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **19.07.1999 JP 20428499**

(71) Applicant: **NEC CORPORATION
Tokyo (JP)**

(72) Inventor: **Nagano, Tsuyoshi
Minato-ku, Tokyo (JP)**

(74) Representative: **Betten & Resch
Reichenbachstrasse 19
80469 München (DE)**

(54) **Optical head with light separator and diffraction type converging device**

(57)　　　There is provided an optical head including a laser diode chip (1), a lens for focusing lights emitted from the laser diode chip, onto an object, an optical separator (4) for separating lights reflected from the object, from an optical axis of a light directing towards the lens from the laser diode chip, a photodiode chip (3) receiving lights having been separated from the optical axis by the optical separator, and a diffraction type light-converging device (4j). The laser diode chip is positioned so that a particular optical path length between the laser diode chip and inner planes of the optical separator (4) is achieved.

**FIG. 8**

EP 1 071 084 A2

Description

## BACKGROUND OF THE INVENTION

### FIELD OF THE INVENTION

The invention relates to an optical head for recording data into and reproducing data from an optical medium such as a phase-change type optical disc and a photo-electro-magnetic tape.

### DESCRIPTION OF THE PRIOR ART

As an example of an optical head including a prism as an optical separator being a square pole in shape, there have been suggested optical heads in Japanese Patent application No. 10-75830, and Japanese Unexamined Patent Publications Nos. 7-134843, 8-55378 and 9-44893. As an example of an optical head including a prism as an optical separator being a polygon in shape, there have been suggested optical heads in Japanese Patent No. 2740758 (Japanese Unexamined Patent Publication No. 8-273189) and Japanese Unexamined Patent Publication No. 10-64107.

Herein, Japanese Patent application No. 10-75830 is not yet published in Japan. Accordingly, Japanese Patent application No. 10-75830 does not constitute prior art in any articles in 35 USC. However, hereinbelow is explained Japanese Patent application No. 10-75830 only for the purpose of better understanding of the present invention. Again, the applicant does not admit that Japanese Patent application No. 10-75830 constitutes prior art in any articles in 35 USC. Japanese Patent application No. 10-75830 corresponds to U.S. Patent Application 09/273,725 filed by the same applicant as the present application.

Figs. 1 and 2 illustrate a first conventional optical head suggested in Japanese Patent application No. 10-75830. Fig. 1 is a front view of the optical head, and Fig. 2 is a plan view of the optical head.

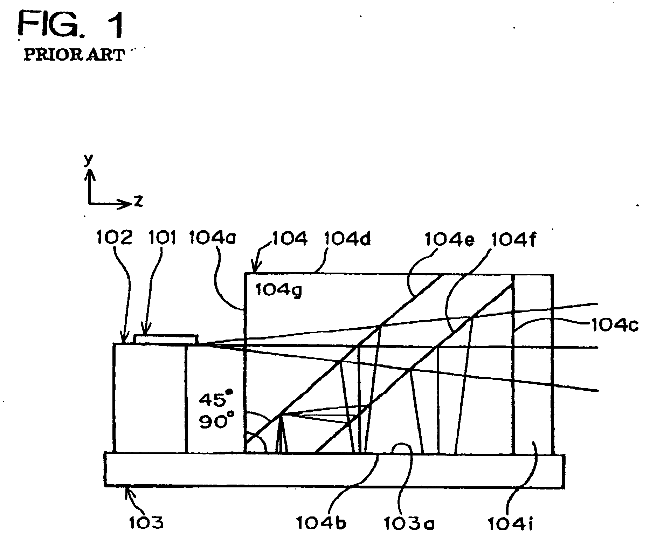

With reference to Fig. 1, the first conventional optical head is comprised of a laser diode chip 101, a sub-mount 102 on which the laser diode chip 101 is mounted and which keeps the laser diode chip 101 at a predetermined height, a lens (not illustrated) for focusing a light emitted from the laser diode chip 101, onto a medium (not illustrated), an optical separator or prism 104 for separating a light reflected from the medium, from an optical axis of a light directing to the lens from the laser diode chip 101, a photodiode chip 103 receiving a light separated from the optical axis by means of the prism 104, and a quarter wavelength plate 104i formed on the photodiode chip 103 integrally with the prism 104.

The optical separator or prism 104 is a square pole in shape defined by a first sidewall 104g and a second sidewall 104h in parallel with each other, and first, second, third and fourth outer surfaces 104a, 104b, 104c and 104d all perpendicular to both the first and second sidewalls 104g and 104h. The first and third outer surfaces 104a and 104c are in parallel with each other. The second outer surface 104b is perpendicular to the first outer surface 104a, and is in parallel with the fourth outer surface 104d.

The prism 104 is designed to have first and second inner planes 104e and 104f both perpendicular to the first and second sidewalls 104g and 104h, in parallel with one another, and both inclined relative to the first outer surface 104a at 45 degrees.

The quarter wavelength plate 104i converts a light having passed through the third outer surface 104c of the prism 104 to a circularly polarized light from a linearly polarized light, and also converts a light having been reflected from the medium from a circularly polarized light to a linearly polarized light having an orientation perpendicular to an original orientation.

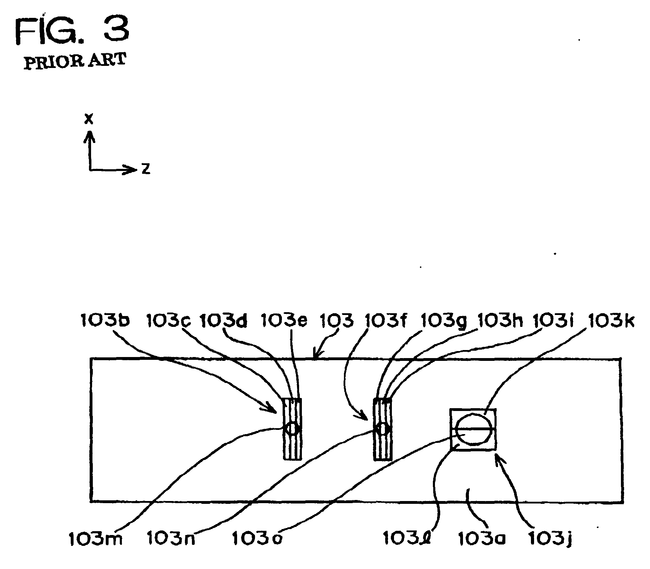

The photodiode chip 103 has a light-receiving plane 103a in parallel with the second outer surface 104b. As illustrated in Fig. 3, a front light-receiving section 103f, a rear light-receiving section 103b and an additional light-receiving section 103j are formed on the light-receiving plane 103a of the photodiode chip 103.

Fig. 3 is a top view of the photodiode chip 103.

With reference to Fig. 3, a light having passed through the second inner plane 104f, having been reflected at the first inner plane 104e, having been reflected at the second inner plane 104f, and having been reflected again at the first inner plane 104e forms a first beam spot 103m on the photodiode chip 103.

A light having passed through the second inner plane 104f, having been reflected at the first inner plane 104e, and having passed again through the second inner plane 104f forms a second beam spot 103n on the photodiode chip 103.

A light having been reflected at the second inner plane 104f forms a third beam spot 103o on the photodiode chip 103.

The rear, front and additional light-receiving sections 103b, 103f and 103m are formed on a light-receiving plane 103a of the photodiode chip 103 in association with the first, second and third beam spots 103m, 103n and 103o, respectively.

As illustrated in Fig. 3, the photodiode chip 103 is designed to have a light-receiving plane 103a which is in parallel with the second outer surface 104b. The front, rear and additional light-receiving sections 103f, 103b and 103j are formed on the light-receiving plane 103a.

As illustrated in Fig. 3, the rear light-receiving section 103b is comprised of three light-receiving sections 103c, 103d and 103e defined by two division lines parallel to an optically radial direction of the medium. Similarly, the front light-receiving section 103f is comprised of three light-receiving sections 103g, 103h and 103i defined by two division lines parallel to an optically radial direction of the medium. The additional light-receiving section 103j is comprised of two light-receiving sections 103k and 103l defined by a division line parallel to an optically tangential direction of the medium.

The laser diode chip 101 is positioned so that an optical path length between the laser diode chip 101 and the first inner plane 104e is equal to (a + b + 3c)/2 wherein "a" indicates an optical path length between the first inner plane 104e and the rear light-receiving section 103b, "b" indicates an optical path length between the second inner plane 104f and the front light-receiving section 103f, and "c" indicates an optical path length between the first and second inner planes 104e and 104f.

The first conventional optical head operates as follows.

A light emitted from the laser diode chip 101 and polarized in a y-axis direction enters the prism 104 through the first outer surface 104a so that an optical axis thereof is perpendicular to the first outer surface 104a. Then, the light transmits through the first and second inner planes 104e and 104f in this order, and leaves the prism 104 at the third outer surface 104c with an optical axis thereof being perpendicular to the third outer surface 104c. The light having left the prism 104 is converted into a circularly polarized light in the quarter wavelength plate 104i, and then, is focused onto the medium through the lens (not illustrated).

The light having been reflected by the medium advances on the same optical path in an opposite direction, and is converted by the quarter wavelength plate 104i into a light polarized in an x-axis direction. Then, the light enters the prism 104 at the third outer surface 104c with an optical axis thereof being perpendicular to the third outer surface 104c.

The light having entered the prism 104 is reflected at the second inner plane 104f by half, and the remaining half of the light passes through the second inner plane 104f.

The light having been reflected at the second inner plane 104f leaves the prism 104 at the second outer surface 104b, enters the photodiode chip 103, and is received in the additional light-receiving section 103j.

The light having passed through the second inner plane 104f is reflected at the first inner plane 104e. Then, the light is reflected at the second inner plane 104f by half, and the remaining half of the light passes through the second inner plane 104f. The light having been reflected at the second inner plane 104f is reflected again at the first inner plane 104e, leaves the prism 104 at the second outer surface 104b, enters the photodiode chip 103, and is received in the rear light-receiving section 103.

The light having been reflected at the first inner plane 104e and having passed through the second inner plane 104f leaves the prism 104 at the second outer surface 104b, enters the photodiode chip 103, and is received in the front light-receiving section 103f.

A focus error signal FE103 is calculated in accordance with the following equation, based on signals S103b to S103l detected at the light-receiving sections 103b to 103l formed on the light-receiving plane 103a of the photodiode chip 103.

$$FE103 = S103c - S103d + S103e - S103g + S103h - S103i$$

A track error signal TE103 is calculated by a push-pull process in accordance with the following equation.

$$TE103 = S103k - S103l$$

A signal indicative of data to be reproduced can be calculated as a sum of the signals S103k and S103l.

Figs. 4 and 5 illustrate a second conventional optical head suggested in Japanese Patent application No. 10-75830. Fig. 4 is a front view of the optical head, and Fig. 5 is a plan view of the optical head.

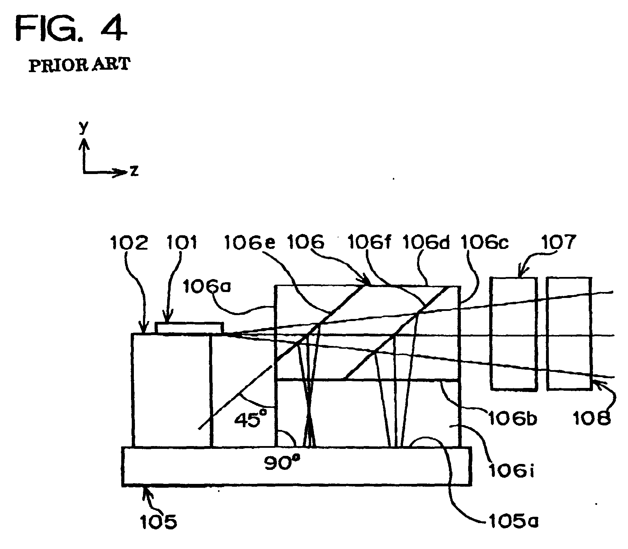

With reference to Fig. 4, the second conventional optical head is comprised of a laser diode chip 101, a submount 102 on which the laser diode chip 101 is mounted and which keeps the laser diode chip 101 at a predetermined height, a lens (not illustrated) for focusing a light emitted from the laser diode chip 101, onto a medium (not illustrated), an optical separator or prism 106 for separating a light reflected from the medium, from an optical axis of a light directing to the lens from the laser diode chip 101, a photodiode chip 105 receiving a light separated from the optical axis by means of the prism 106, a base 106i sandwiched between the prism 106 and the photothode chip 105 and composed of light-permeable material, a two-divisional grating 107 located in facing relation with the prism 106, and a quarter wavelength plate 108 located in alignment with the two-divisional grating 107.

The optical separator or prism 106 is a rectangular parallelopiped in shape defined by a first sidewall 106g and a second sidewall 106h in parallel with each other, and first, second, third and fourth outer surfaces 106a, 106b, 106c and 106d all perpendicular to both the first and second sidewalls 106g and 106h. The first and third outer surfaces 106a and 106c are in parallel with each other. The second outer surface 106b is perpendicular to the first outer surface 106a, and is in parallel with the fourth outer surface 106d.

The prism 106 is designed to have first and second inner planes 106e and 106f both perpendicular to the first and second sidewalls 106a and 106h, in parallel with one another, and both inclined relative to the first outer surface 106a at 45 degrees.

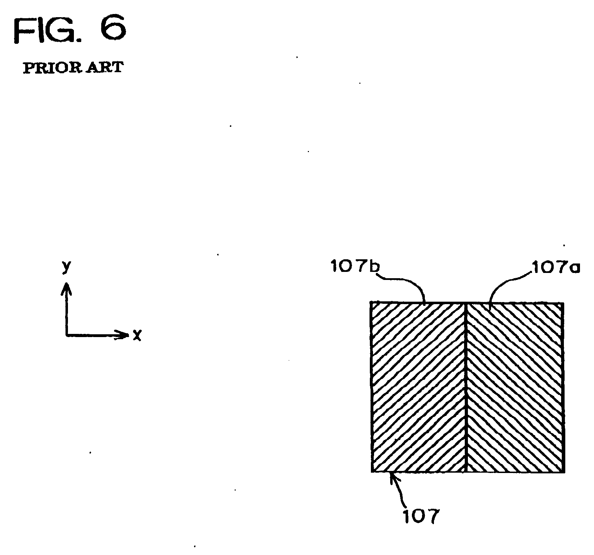

As illustrated in Fig. 6, the two-divisional grating 107 is designed to have first and second regions 107a and 107b partitioned by a division line extending in parallel to a y-axis.

The quarter wavelength plate 108 converts a light having passed through the third outer surface 106c of the prism 106 to a circularly polarized light from a linearly polarized light, and also converts a light having been reflected from the medium from a circularly polarized light to a linearly polarized light having an orientation perpendicular to an original orientation.

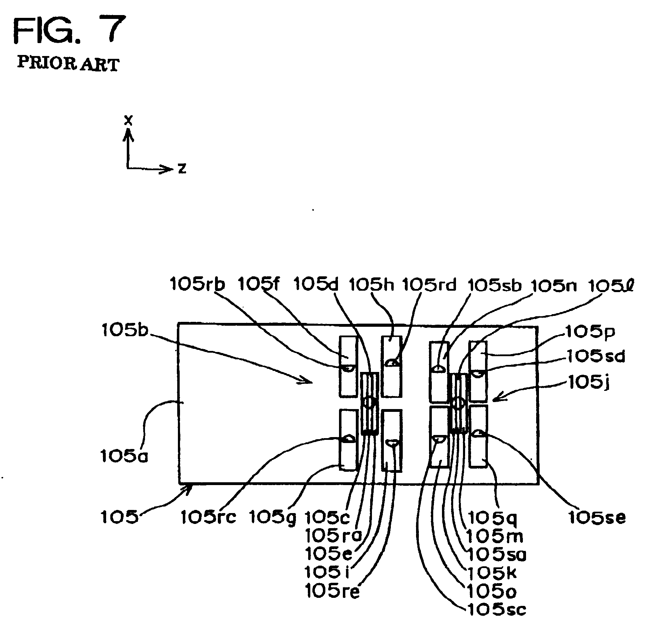

The photodiode chip 105 has a light-receiving plane 105a in parallel with the second outer surface 106b. As illustrated in Fig. 7, a front light-receiving section 105j and a rear light-receiving section 105b are formed on the light-receiving plane 105a.

With reference to Fig. 7, a light having been reflected at the first inner plane 106e forms five beam spots 105ra, 105rb, 105rc, 105rd and 105re on the photo diode chip 105, and a light having been reflected at the second inner plane 106f forms five beam spots 105sa, 105sb, 105sc, 105sd and 105se on the photo diode chip 105.

The beam spots 105rb, 105sb, 105re and 105se are comprised of a diffracted light passing through the first region 107a of the two-divisional grating 107, and the beam spots 105rc, 105sc, 105rd and 105sd are comprised of a diffracted light passing through the second region 107b of the two-divisional grating 107. The beam spots 105ra and 105sa are comprised of a transmitted light passing through the two-divisional grating 107.

The beam spots 105rb, 105rc, 105rd and 105re are all semicircular in shape, and are positioned radially around the beam spot 105ra which is circular in shape. Similarly, the beam spots 105sb, 105sc, 105sd and 105se are all semicircular in shape, and are positioned radially around the beam spot 105sa which is circular in shape.

In the rear light-receiving section 105b, the beam spots 105rb and 105rc are positioned so that the arcuate portions of them face each other, and the beam spots 105rd and 105re are positioned so that the arcuate portions of them face each other in opposite directions. In the front light-receiving section 105j, the beam spots 105sb and 105sc are positioned so that the arcuate portions of them face each other in opposite directions, and the beam spots 105sd and 105se are positioned so that the arcuate portions of them face each other.

The front light-receiving section 105j is associated with the beam spots 105sa, 105sb, 105sc, 105sd and 105se, and the rear light-receiving section 105b is associated with the beam spots 105ra, 105rb, 105rc, 105rd and 105re.

As illustrated in Fig. 7, the front light-receiving section 105j is comprised of five rectangular light-receiving sections each located around each of the beam spots 105sa, 105sb, 105sc, 105sd and 105se. Around the circular beam spot 105sa are formed three light-receiving sections 105k, 105l and 105m partitioned by two division lines both optically parallel to an optically radial direction of the medium. Around the semicircular beam spots 105sb, 105sc, 105sd and 105se are formed rectangular light-receiving sections 105n, 105o, 105p and 105q, respectively.

Similarly, the rear light-receiving section 105b is comprised of five rectangular light-receiving sections each located around each of the beam spots 105ra, 105rb, 105rc, 105rd and 105re. Around the circular beam spot 105ra are formed three light-receiving sections 105c, 105d and 105e partitioned by two division lines both optically parallel to an optically radial direction of the medium. Around the semicircular beam spots 105rb, 105rc, 105rd and 105re are formed rectangular light-receiving sections 105f, 105g, 105h and 105i, respectively.

The laser diode chip 101 is positioned so that an optical path length between the laser diode chip 101 and the first inner plane 106e is equal to (a + b - c)/2 wherein "a" indicates an optical path length between the first inner plane 106e and the rear light-receiving section 105b, "b" indicates an optical path length between the second inner plane 106f and the front light-receiving section 105j, and "c" indicates an optical path length between the first and second inner planes 106e and 106f.

The second conventional optical head operates as follows.

A light emitted from the laser diode chip 101 and polarized in a y-axis direction enters the prism 106 through the first outer surface 106a so that an optical axis thereof is perpendicular to the first outer surface 106a. Then, the light transmits through the first and second inner plane 106e and 106f in this order, and leaves the prism 106 at the third outer surface 106c with an optical axis thereof being perpendicular to the third outer surface 106c. After passing through the two-divisional grating 107, the light is converted into a circularly polarized light in the quarter wavelength plate 108, and then, is focused onto the medium through the lens (not illustrated).

The light having been reflected by the medium advances on the same optical path in an opposite direction, and is converted by the quarter wavelength plate 108 into a light polarized in an x-axis direction. Then, the light is separated into a diffracted light and a transmitted light in the two-divisional grating 107. Then, the transmitted light enters the prism 106 at the third outer surface 106c with an optical axis thereof being perpendicular to the third outer surface 106c.

The transmitted light having entered the prism 106 is reflected at the second inner plane 106f by half, and the remaining half of the light passes through the second inner plane 106f.

Fig. 4 illustrates only the transmitted light passing through the two-divisional grating 107, and does not illustrate the diffracted light.

The light having been reflected at the second inner plane 106f leaves the prism 106 at the second outer surface 106b, passes through the base 106i, enters the photodiode chip 105, and is received in the front light-receiving section 105j formed on the light-receiving plane 105a of the photodiode chip 105.

The light having passed through the second inner plane 106f is reflected at the first inner plane 106e, leaves the prism 106 at the second outer surface 106b, passes through the base 106i, enters the photodiode chip 105, and is received in the rear light-receiving section 105b formed on the light-receiving plane 105a of the photodiode chip 105.

A focus error signal FE105 is calculated in accordance with the following equation, based on signals S105b to S105q detected at the light-receiving sections 105b to 105q constituting the front and rear light-receiving sections 105j and 105b formed on the light-receiving plane 105a of the photodiode chip 105.

$$FE105 = S105c - S105d + S105e - S105k + S105l - S105m$$

A track error signal TE105 is calculated by a push-pull process in accordance with the following equation.

$$TE105 = (S105f + S105i + S105n + S105q) - (S105g + S105h + S105o + S105p)$$

A signal indicative of data to be reproduced can be calculated as a sum of the signals S105f, S105i, S105n, S105q, S105g, S105h, S105o and S105p.

The above-mentioned first and second conventional optical heads are accompanied with the following problems.

The first problem is that it is unavoidable for the optical head to be thick.

As mentioned earlier, in the first conventional optical head, the laser diode chip 101 is positioned such that an optical path length between the laser diode chip 101 and the first inner plane 104e is equal to $(a + b + 3c)/2$ wherein "a" indicates an optical path length between the first inner plane 104e and the rear light-receiving section 103b, "b" indicates an optical path length between the second inner plane 104f and the front light-receiving section 103f, and "c" indicates an optical path length between the first and second inner planes 104e and 104f. As a result, when the medium is located at a light-converging point of the lens, a light having been reflected at the medium is focused onto a point which is at the rear of the front light-receiving section 103f and in front of the rear light-receiving section 103b and at which an optical path length F is equal to $(a - b + c)/2$.

If the focus error signal had too low sensitivity, it would be difficult to keep a medium within a depth of focus of a lens by means of a servo. On the other hand, if the focus error signal had too high sensitivity, the optical head had to be assembled with small tolerance. Hence, there exists optimal sensitivity. This optimal sensitivity is determined in dependence on the above-mentioned optical path length F. Since an optical path length $(c + a)$ between an optical axis of a light emitted from the laser diode chip 101 and the light-receiving plane 103a of the photodiode chip 103 is equal to $(2F + b)$, it would be unavoidable for the optical head to be thick.

The second problem is that the signal indicative of data to be reproduced is less qualified.

A quality of the signal indicative of data to be reproduced is dependent on how many percents of a light having been reflected at a medium can be distributed into the signal. However, in the first conventional optical head, a light received in the light-receiving section 103k is low, specifically, about 25% of a light having been reflected at a medium, and a light received in the light-receiving section 103l is also low, specifically, about 25% of a light having been reflected at a medium. As a result, the signal indicative of data to be reproduced could have only low quality.

The third problem is a high cost for fabricating an optical head.

For instance, the above-mentioned second conventional optical head has to include the two-divisional grating 107 which is quite expensive. In addition, it takes not so small labor to mount the two-divisional grating 107.

The fourth problem is that stray light caused by flaw of a medium enters the optical head, resulting in reduction in productivity of the diffraction device and reduction in resistance against fluctuation in a wavelength of a light source.

The track error signal is detected by measuring an intensity profile of a light reflected at a medium. However, since the light intensity profile is varied into a profile which cannot be divided into areas, at near-field by Fourier transformation, it is unavoidable to measure the light intensity profile at far-field by dividing the profile into areas. Hence, the second conventional optical head has to divide a light having been reflected at a medium, into areas by means of the two-divisional grating 107 located at far-field.

However, since the light receiving sections 105f to 105i and 105n to 105q which can be located at near-field without problems are located at far-field, the beam spots 105ra to 105se do not form a point beam, but form a beam larger in size than a point. Specifically, in the second conventional optical head, it is unavoidable for a beam spot to be formed larger, since a light having been reflected at a medium is divided into areas, and a plurality of the light-receiving sections are located at far-field.

Thus, the light-receiving planes are entirely covered with the light-receiving sections, resulting in that a stray light caused by flaw of a medium unpreferably enters the light-receiving sections. In addition, since a spacing between adjacent light-receiving sections becomes greater, a spacing between gratings in the diffraction device unavoidably becomes smaller. As a result, productivity of the diffraction device is lowered, and a resistance against fluctuation in a wavelength of a light source is also deteriorated.

The fifth problem is that the conventional optical heads cannot reproduce data at a high rate.

Reduction in amplifier noises in an optical head is absolutely necessary for reproducing data at a high rate. Such reduction can be accomplished by forming an amplifier and a photodiode on the same substrate. However, if they are formed on the same substrate, a frequency of a signal to be detected is restricted by an area of a light-receiving section.

In the first conventional optical head, since the beam spot 103o is large in size, the additional light-receiving section 103k is unavoidably large in size. In the second conventional optical head, since the beam spots 105rb to 105re and 105sb to 105se are large in size, the light-receiving sections 105f to 105i and 105n to 105q are unavoidable large in size. Hence, the first and second conventional optical heads cannot detect a signal having necessary frequencies, resulting in that they cannot reproduce data at a high rate.

## SUMMARY OF THE INVENTION

In view of the above-mentioned problems of the conventional optical heads, it is an object of the present invention to provide an optical head which is capable of providing a qualified signal indicative data to be reproduced, having a high resistance against flaw of a medium, high productivity of a diffraction device, and high resistance against fluctuation in a wavelength of a light source, and reproducing data at a high rate.

There is provided an optical head including (a) a laser diode chip, (b) a lens for focusing lights emitted from the laser diode chip, onto an object, (c) an optical separator for separating lights reflected from the object, from an optical axis of a light directing towards the lens from the laser diode chip, and (d) a photodiode chip receiving lights having been separated from the optical axis by the optical separator, the optical separator being a square pole in shape defined by a first sidewall, a second sidewall in parallel with the first the wall, and first, second, third and fourth outer surfaces all perpendicular to both the first and second sidewalls, the first and third outer surfaces being in parallel with each other, characterized by the optical head further comprising a diffraction type light-converging device, the optical separator having first and second inner planes both perpendicular to the first and second sidewalls and in parallel with each other, and both being inclined relative to the first outer surface at a predetermined angle, the photodiode chip having a light-receiving plane in parallel with the second outer surface, a light directing towards the lens from the laser diode chip, entering the first outer surface, passing through the first and second inner planes in this order, leaving the optical separator at the third outer surface, and being focused onto the object by the lens, the light having been reflected by the object, entering the third outer surface, being reflected at the second inner plane by $\delta$ %, and passing through the second inner plane by $(100-\delta)$ % wherein $\delta$ is a positive number greater than zero, but smaller than 100 ($0 < \delta < 100$), the light having been reflected at the second inner plane, leaving the optical separator at the second outer surface, and being received in a front light-receiving section formed on the light-receiving plane of the photodiode chip, the light being reflected at the first inner plane after having passed through the second inner plane, entering the second inner plane, being reflected at the second inner plane by $\delta$ %, and passing through the second inner plane by $(100-\delta)$ %, the light being reflected at the first inner plane after having been reflected at the second inner plane, leaving the optical separator at the second outer surface, and being received in a rear light-receiving section formed on the light-receiving plane of the photodiode chip, a part of the light emitted from the laser diode chip being reflected at the first and second inner planes, being reflected at the diffraction type light-converging device, and being received in a monitor light-receiving section formed on the light-receiving plane of the photodiode chip, the laser diode chip being positioned so that an optical path length between the laser diode chip and the first inner plane is equal to a predetermined length defined by a, b and c wherein "a" indicates an optical path length between the first inner plane and the rear light-receiving section, "b" indicates an optical path length between the second inner plane and the front light-receiving section, and "c" indicates an optical path length between the first and second inner planes.

The advantages obtained by the aforementioned present invention will be described hereinbelow.

The first advantage is that it is possible to fabricate an optical head thin.

In the first conventional optical head, an optical path length (c + a) between an optical axis of a light emitted from the laser diode chip 101 and the light-receiving plane 103a of the photodiode chip 103 is equal to (2F + b), wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b. Hence, it is unavoidable for the first conventional optical head to be thick.

In contrast, in the optical head in accordance with the certain embodiment, the laser diode chip is positioned such that an optical path length between the laser diode chip and the first inner plane is equal to (a + b - c)/2 wherein "a" indicates an optical path length between the first inner plane and the rear light-receiving section, "b" indicates an optical path length between the second inner plane and the front light-receiving section, and "c" indicates an optical path length between the first and second inner planes. Hence, when a medium is located at a light-converging point of a lens, a light having been reflected at the medium is focused onto a point which is at the rear of the front light-receiving section and in front of the rear light-receiving section and at which an optical path length H is equal to (a - b + 3c)/2 . Accordingly, an optical path length (c + a) between an optical axis of a light emitted from the laser diode chip and a light-receiving plane of the photodiode chip is equal to (2h + 2a + b)/3, that is, (2h + b)-2 (2h-a + b)/3 . In general, (2h-a + b ) is greater than zero ((2h-a + b) >0 ). Hence, the optical head in accordance with the present invention can be formed thinner than the first conventional optical head when H is equal to F (H = F ) at which the focus error signals have sensitivities equal to each other.

In accordance with the certain embodiment, the laser diode chip is positioned so that an optical path length E between the laser diode chip and the first inner plane meets with the following conditions:

$$E \neq (a + b + c)/2 \text{ and } (b - c) < E < (a + 2c)$$

wherein "a" indicates an optical path length between the first inner plane and the rear light-receiving section, "b" indicates an optical path length between the second inner plane and the front light-receiving section, and "c" indicates an optical path length between the first and second inner planes. Hence, if a medium is located at a light-converging point of a lens, a light having been reflected at the medium is converged at both a point at which an optical path length I behind the front light-receiving section is equal to (e - b + c ) and a point at which an optical path length J in front of the rear light-receiving section is equal to (-e + a + 2c ). Accordingly, an optical path length (c + a) between an optical axis of a light emitted from the laser diode chip and a light-receiving plane of the photodiode chip is equal to (i + j + 2a +b)/3, that is, (i + j + b) - 2 (i + j - a + b)/3 . Hence, the optical head in accordance with the present invention can be formed thinner than the conventional optical head when (i + j)/2 is equal to F ((i + j)/2 = F ) at which the focus error signals have sensitivities equal to each other.

In accordance with the certain embodiment, the laser diode chip is positioned such that an optical path length between the laser diode chip and the first inner plane is equal to (a + b - c)/2 wherein "a" indicates an optical path length between the first inner plane and the rear light-receiving section, "b" indicates an optical path length between the second inner plane and the front light-receiving section, and "c" indicates an optical path length between the first and second inner planes. Hence, when a medium is located at a light-converging point of a lens, a light having been reflected at the medium is focused onto a point which is at the rear of the front light-receiving section and in front of the rear light-receiving section and at which an optical path length L is equal to (a - b + c) /2 . Accordingly, an optical path length "a" between an optical axis of a light emitted from the laser diode chip and a light-receiving plane of the photodiode chip is equal to (2L + b-c ). Hence, the optical head in accordance with the present invention can be formed thinner than the conventional optical head when L is equal to F (L = F ) at which the focus error signals have sensitivities equal to each other.

In accordance with the certain embodiment, the laser diode chip is positioned such that an optical path length between the laser diode chip and the first inner plane is equal to (a + b + 3c)/2 wherein "a" indicates an optical path length between the first inner plane and the rear light-receiving section, "b" indicates an optical path length between the second inner plane and the front light-receiving section, and "c" indicates an optical path length between the first and second inner planes. Hence, when a medium is located at a light-converging point of a lens, a light having been reflected at the medium and having passed through a hologram is focused onto a point which is at the rear of the front light-receiving section and in front of the rear light-receiving section and at which an optical path N is equal to (a-b + c)/2 . A positive first-order light having been diffracted at the hologram is converged at a point at which an optical path length O behind the front light-receiving section is equal to N - M (O = N - M ) , that is a point at which an optical path length P in front of the rear light-receiving section is equal to N + M (P = N + M ) . A negative first-order light having been diffracted at the hologram is converged at a point at which an optical path length P behind the front light-receiving section is equal to N + M (P = N + M) , that is a point at which an optical path length O in front of the rear light-receiving section is equal to N - M (P = N - M) . Accordingly, an optical path length (c + a) between an optical axis of a light emitted from the laser diode chip and a light-receiving plane of the photodiode chip is equal to ( 2 (p - m) + b ). Hence, the optical head in accordance with the present invention can be formed thinner than the conventional optical head when P is equal to F ( P = F ) at which the focus error signals have sensitivities equal to each other.

The second advantage is that the optical head in accordance with the present invention can provide a qualified signal indicative of reproduced data.

In the optical head in accordance with a certain embodiment of the present invention, a ratio of a quantity of a light to be received at a central light-receiving section to a quantity of a light reflected at a medium is equal to (100-$\delta$)/2 %. By setting $\delta$ to be smaller than 50, the ratio can be over 25%.

The third advantage is that the optical head in accordance with the present invention can be fabricated in low costs.

This is because the optical head in accordance with a certain embodiment no longer needs an expensive diffraction device, and hence, it is possible to omit a step of mounting a diffraction device.

The fourth advantage is that it is possible to prevent a stray light caused by flaw of a medium from entering the optical head. As a result, it is possible to enhance both productivity of a diffraction device and resistance to fluctuation in a wavelength of a light source.

In the optical head in accordance with a certain embodiment, the front and rear light-receiving sections are located not at near-field, but at far-field. Hence, a beam spot is not formed as a spot, but there are not formed a lot of beam spots, because there is employed a diffraction device which is not divided into areas. As a result, it is possible to prevent a stray light from entering the optical head for the reason that a light-receiving plane is entirely covered with light-receiving sections, and it is also possible to prevent reduction of both productivity of the diffraction device and resistance against fluctuation in a wavelength of a light source both of which would occur when a spacing between adjacent light-receiving sections becomes greater, and resultingly a spacing between gratings in the diffraction device unavoidably becomes smaller.

The fifth advantage is that the optical head in accordance with the present invention can reproduce data at a high rate.

In the optical head in accordance with a certain embodiment, it is possible to reduce an area of a light-receiving section, because the central light-receiving section is located in the vicinity of a light-converging point at which a light having been reflected is converged, when a medium is located at a light-converging point of a lens.

As an alternative, in the optical head in accordance with another embodiment, it is possible to reduce an area of a light-receiving section, because the diffraction device converges a diffracted light generated by the diffraction device itself and having an order of one of signs, and scattered a diffracted light generated by the diffraction device itself and having an order of the other.

## BRIEF DESCRIPTION OF THE DRAWINGS

Fig. 1 is a front view of a first conventional optical head.

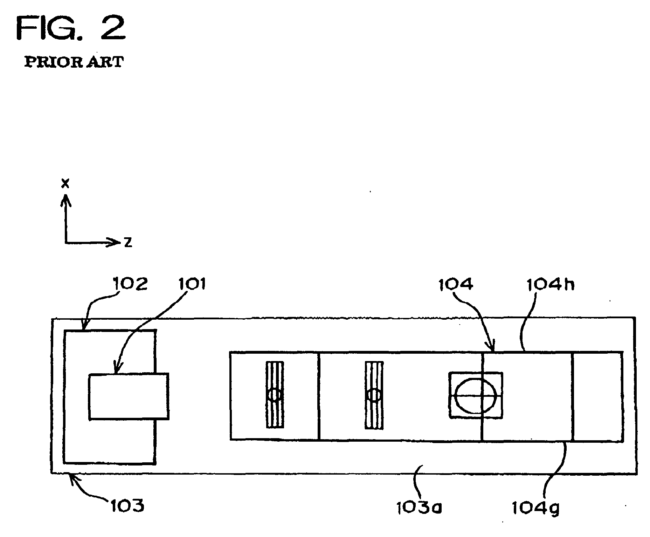

Fig. 2 is a plan view of a first conventional optical head.

Fig. 3 is a plan view of a photodiode chip in the first conventional optical head.

Fig. 4 is a front view of a second conventional optical head.

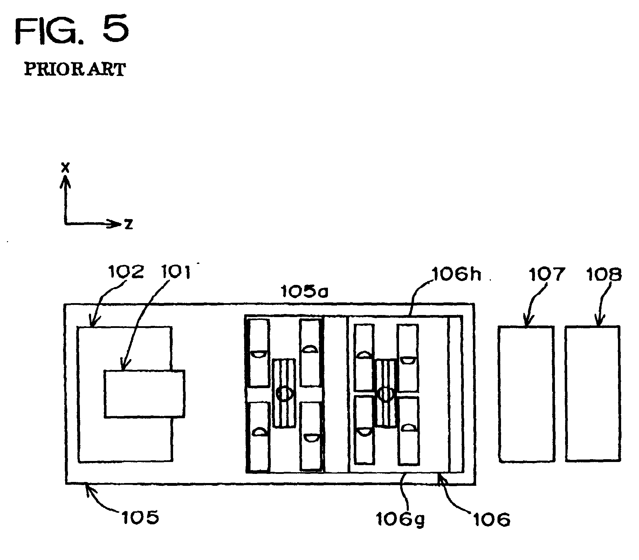

Fig. 5 is a plan view of a second conventional optical head.

Fig. 6 is a plan view of a two-divisional grating in the second conventional optical head.

Fig. 7 is a plan view of a photodiode chip in the second conventional optical head.

Fig. 8 is a front view of an optical head in accordance with the first embodiment of the present invention.

Fig. 9 is a front view of a prism used in an optical head in accordance with the first embodiment of the present invention.

Fig. 10 is a plan view of a photodiode chip used in an optical head in accordance with the first embodiment of the present invention.

Fig. 11 is a perspective view of a diffraction type light-converging device used in an optical head in accordance with the first embodiment of the present invention.

Fig. 12 is a front view of an example of the optical head in accordance with the first embodiment.

Fig. 13 is a front view of another example of the optical head in accordance with the first embodiment.

Fig. 14 is a front view of an optical head in accordance with the second embodiment of the present invention.

Fig. 15 is a front view of a prism used in an optical head in accordance with the second embodiment of the present invention.

Fig. 16 is a plan view of a photodiode chip used in an optical head in accordance with the second embodiment of the present invention.

Fig. 17 is a perspective view of a diffraction type light-converging device used in an optical head in accordance with the second embodiment of the present invention.

Fig. 18 is a front view of an optical head in accordance with the third embodiment of the present invention.

Fig. 19 is a front view of a prism used in an optical head in accordance with the third embodiment of the present invention.

Fig. 20 is a plan view of a photodiode chip used in an optical head in accordance with the third embodiment of the present invention.

Fig. 21 is a perspective view of a diffraction type light-converging device used in an optical head in accordance with the third embodiment of the present invention.

Fig. 22 is a right side view of a four-divisional grating used in an optical head in accordance with the third embodiment of the present invention.

Fig. 23 is a front view of an optical head in accordance with the fourth embodiment of the present invention.

Fig. 24 is a front view of a prism used in an optical head in accordance with the fourth embodiment of the present invention.

Fig. 25 is a plan view of a photodiode chip used in an optical head in accordance with the fourth embodiment of the present invention.

Fig. 26 is a right side view of a divisional grating used in an optical head in accordance with the fourth embodiment of the present invention.

Fig. 27 is a front view of an optical head in accordance with the fifth embodiment of the present invention.

Fig. 28 is a front view of a prism used in an optical head in accordance with the fifth embodiment of the present invention.

Fig. 29 is a plan view of a photodiode chip used in an optical head in accordance with the fifth embodiment of the present invention.

Fig. 30 is a right side view of a hologram used in an optical head in accordance with the fifth embodiment of the present invention.

Fig. 31 illustrates paths of both a light reflected at a medium and passing through a hologram and a light diffracted at a hologram, in the case that a medium is located at a light-converging point of a lens, in the optical head in accordance with the fifth embodiment of the present invention.

## DESCRIPTION OF THE PREFERRED EMBODIMENTS

Preferred embodiments in accordance with the present invention will be explained hereinbelow with reference to drawings.

### [First Embodiment]

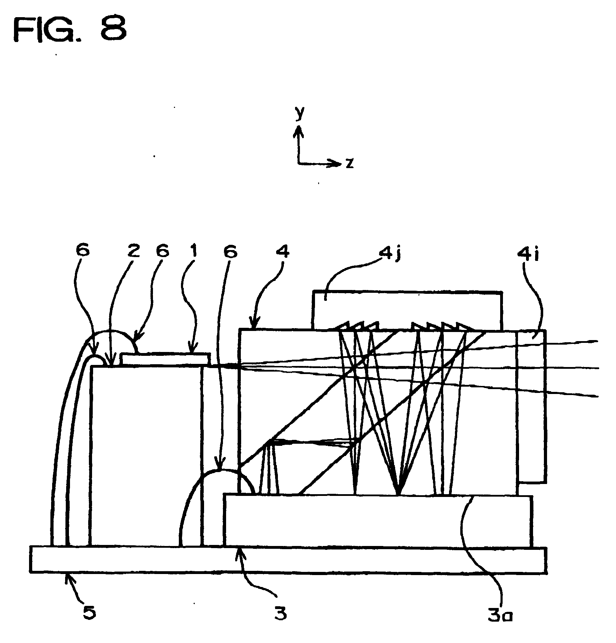

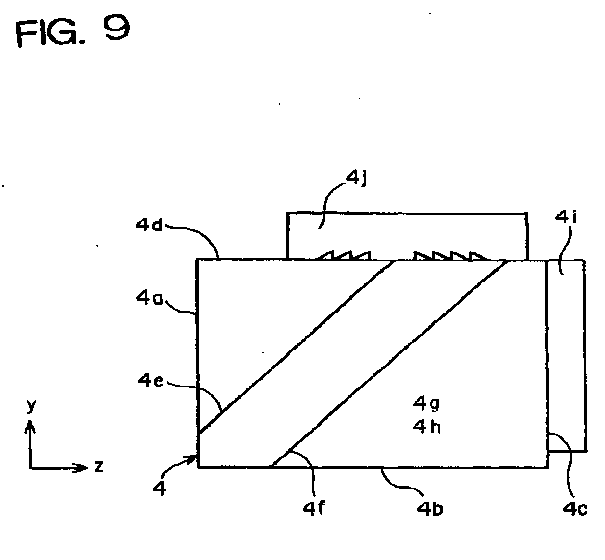

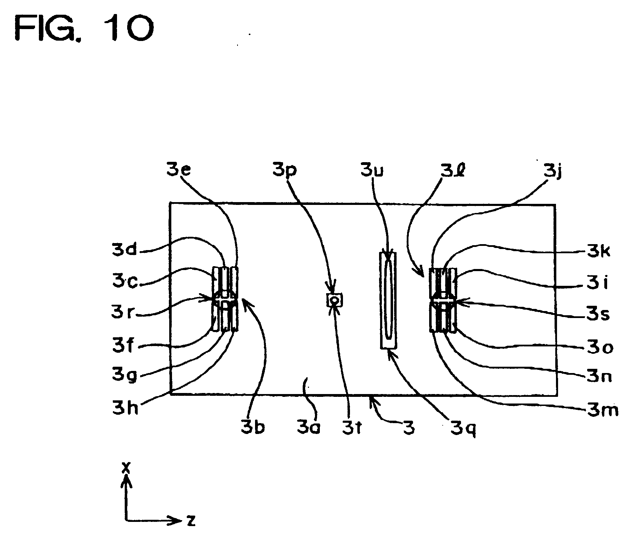

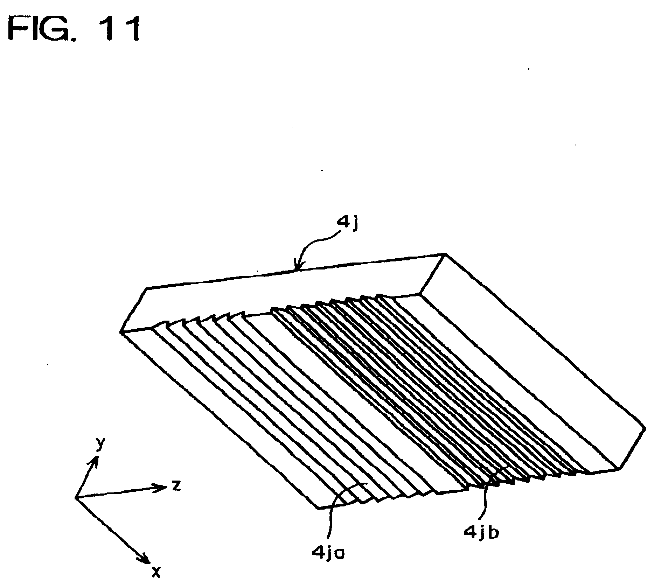

Figs. 8 to 11 illustrate an optical head in accordance with the first embodiment of the present invention. Fig. 8 is a front view of the optical head, Fig. 9 is a front view of the prism used in the optical bead, Fig. 10 is a plan view of the photodiode chip used in the optical head, and Fig. 11 is a perspective view of the diffraction type light-converging device used in the optical head.

With reference to Fig. 8, the optical head in accordance with the first embodiment is comprised of a laser diode chip 1, a sub-mount 2 on which the laser diode chip 1 is mounted and which keeps the laser diode chip 1 at a predetermined height, a lens (not illustrated) for focusing a light emitted from the laser diode chip 1, onto a medium (not illustrated), an optical separator or prism 4 for separating a light reflected from the medium, from an optical axis of a light directing to the lens from the laser diode chip 1, a photodiode chip 3 receiving a light separated from the optical axis by means of the prism 4, a quarter wavelength plate 4i located between the prism 4 and the medium and integral with the prism 4, a diffraction type light-converging device 4j lying on an upper surface of the prism 4, and a lead frame 5 on which the sub-mount 2 and the photodiode chip 3 are mounted.

With reference to Fig. 9, the optical separator or prism 4 is a rectangular parallelopiped in shape defined by a first sidewall 4g and a second sidewall 4h in parallel with each other, and first, second, third and fourth outer surfaces 4a, 4b, 4c and 4d all perpendicular to both the first and second sidewalls 4g and 4h. The first and third outer surfaces 4a and 4c are in parallel with each other. The second outer surface 4b is perpendicular to the first outer surface 4a, and is in parallel with the fourth outer surface 4d.

The prism 4 is designed to have first and second inner planes 4e and 4f both perpendicular to the first and second sidewalls 4g and 4h, in parallel with one another, and both inclined relative to the first outer surface 4a at 45 degrees.

The quarter wavelength plate 4i converts a light having passed through the third outer surface 4c of the prism 4 to a circularly polarized light from a linearly polarized light, and also converts a light having been reflected from the medium from a circularly polarized light to a linearly polarized light having an orientation perpendicular to an original orientation.

The quarter wavelength plate 4i may be integral with the prism 4, or may not be integral with the prism 4. The quarter wavelength plate 4i may be positioned anywhere in an optical path between the prism 4 and the medium.

The photodiode chip 3 has a light-receiving plane 3a in parallel with the second outer surface 4b. As illustrated in Fig. 10, a rear light-receiving section 3b, a central light-receiving section 3p, a front light-receiving section 3i and a monitor light-receiving section 3q are formed on the light-receiving plane 3a.

A light having been emitted from the laser diode chip 1 is partially reflected at the first and second inner planes 4e and 4f of the prism 4, reflected at the diffraction type light-converging device 4j, and forms a beam spot 3u on the photodiode chip 3. The monitor light-receiving section 3p is formed in association with the beam spot 3u.

As illustrated in Fig. 11, the diffraction type light-converging device 4j is designed to have a first region 4ja and a second region 4jb.

It is assumed that a first point light source is positioned on a first line passing through a center of the beam spot 3u and extending in parallel with an x-axis, and a second point light source is positioned on a second line passing through a light-emission point of the laser diode chip 1 and extending in parallel with an x-axis. The first region 4ja is designed to have a saw-shaped cross-section in correspondence with interference fringes defined by a light emitted from the first point light source and a light emitted from the second point light source and reflected at the first inner plane 4e. The second region 4jb is designed to have a saw-shaped cross-section in correspondence with interference fringes defined by a light emitted from the first point light source and a light emitted from the second point light source and reflected at the second inner plane 4f.

It is preferable that the saw-shaped cross-sections meet with Bragg's conditions. As an alternative, the saw-shaped cross-sections may be rectangular cross-sections. Though a diffraction efficiency can be varied by varying a depth of the saw, it is preferable to coat the diffraction type light-converging device with a metal or dielectric film for varying a transmission rate in order to prevent generation of unnecessary lights.

Since the interference fringes formed by the first and second point light sources are uniformly located in an x-axis direction, the saws in the diffraction type light-converging device 4j extend uniformly in a x-axis direction, ensuring that the diffraction type light-converging device 4j can be readily fabricated and mounted on the prism 4.

However, the diffraction type light-converging device 4j has light-converging function only in a z-axis direction, and does not have light-converging function in a x-axis direction, resulting in that the beam spot 3u extends in a x-axis direction.

When a light is to be converged also in a x-axis direction, it is necessary to prepare another diffraction type light-converging device having the following function. It is assumed that a first point light source is located at a center of the beam spot 3u, and a second point light source is positioned at a light-emission point of the laser diode chip 1. The first region 4ja is designed to have a saw-shaped cross-section in correspondence with interference fringes defined by a light emitted from the point light source and a light emitted from the second point light source and reflected at the first inner plane 4e. The second region 4jb is designed to have a saw-shaped cross-section in correspondence with interference fringes defined by a light emitted from the first point light source and a light emitted from the second point light source and reflected at the second inner plane 4f.

It is not always necessary to render the diffraction type light-converging device 4j to be integral with the prism 4. However, if they are formed integral with each other, the diffraction type light-converging device 4j can be readily positioned relative to the prism 4.

A light reflected at the medium passes through the prism 4, and reaches the photodiode chip 3 as follows.

A light having passed through the second inner plane 4f, reflected at the first inner plane 4e, reflected at the second inner plane 4f, and reflected at the first inner plane 4e again forms a beam spot 3r on the photodiode chip 3. A light having passed through the second inner plane 4f, reflected at the first inner plane 4e, and passed through the second inner plane 4f again forms a beam spot 3t on the photodiode chip 3. A light having been reflected at the second inner plane 4f forms a beam spot 3s on the photodiode chip 3. The rear, central and front light-receiving sections 3b, 3p and 3i are formed in correspondence with the beam spots 3r, 3t and 3s, respectively.

As illustrated in Fig. 10, the front light-receiving section 3i is comprised of six light-receiving sections 3c, 3d, 3e, 3f, 3g and 3h partitioned by both a partition line optically parallel to a tangential direction of the medium and a partition line optically parallel to a radial direction of the medium. Similarly, the rear light-receiving section 3b is comprised of six light-receiving sections 3j, 3k, 3l, 3m, 3n and 3o partitioned by both a partition line optically parallel to a tangential direction of the medium and a partition line optically parallel to a radial direction of the medium.

The laser diode chip 1 is positioned so that an optical path length between the laser diode chip 1 and the first inner plane 4e is equal to $(a + b + c)/2$ wherein "a" indicates an optical path length between the first inner plane 4e and the rear light-receiving section 3b, "b" indicates an optical path length between the second inner plane 4f and the front light-receiving section 3i, and "c" indicates an optical path length between the first and second inner planes 4e and 4f.

The optical head in accordance with the first embodiment operates as follows.

A light emitted from the laser diode chip 1 and polarized in a y-axis direction enters the prism 4 through the first outer surface 4a so that an optical axis thereof is perpendicular to the first outer surface 4a. The light is reflected at the first and second inner planes 4e and 4f by a couple of percents, and leaves the prism 4 at the third outer surface 4c with an optical axis thereof being perpendicular to the third outer surface 4c. The light having been reflected at the first and second inner planes 4e and 4f by a couple of percents leaves the prism 4 through the fourth outer surface 4d, is reflected at the diffraction type light-converging device 4j, and enters the prism 4 again through the fourth outer surface 4d. Then, the light passes through the first and second inner planes 4e and 4f, leaves the prism 4 through the second outer surface 4b, enters the photodiode chip 3, and is received in the monitor light-receiving section 3q.

A quantity of a light emitted from the laser diode chip 1 varies with the lapse of time and in dependence on a temperature, but can be controlled to a desired quantity by virtue of a signal detected in the monitor light-receiving section 3q.

By forming a light-receiving section with the sub-mount 2, it would be possible to measure a quantity of a light emitted from the laser diode chip 1 at the rear thereof. However, since a ratio between quantities of lights emitted from the laser diode chip 1 at the front and rear thereof varies while the optical head is in operation, it is preferable to measure a quantity of a light emitted from the laser diode chip 1 at the front thereof which light is used for actual reproduction of data.

It would be possible to detect a signal by replacing the diffraction type light-converging device 4j with a photodiode chip.

The diffraction type light-converging device 4j may be sealed into a package which is a protector of the optical head from moisture and dust. Since the diffraction type light-converging device 4j is integral with the package, diffraction type light-converging device 4j does not constitute a hindrance for making the optical head thin.

The light having been converted into a circularly polarized light in the quarter wavelength plate 4i is focused onto the medium through the lens (not illustrated).

The light having been reflected by the medium advances on the same optical path in an opposite direction, and is converted by the quarter wavelength plate 4i into a light polarized in an x-axis direction. Then, the light enters the prism 4 at the third outer surface 4c with an optical axis thereof being perpendicular to the third outer surface 4c.

The light having entered the prism 4 is reflected at the second inner plane 4f by $\delta$ %, and the remaining (100-$\delta$)% of the light passes through the second inner plane 4f.

The light having been reflected at the second inner plane 4f leaves the prism 4 through the second outer surface 4b, enters the photodiode chip 3, and is received in the front light-receiving section 3i.

The light having passed through the second inner plane 4f is reflected at the first inner plane 4e. Then, the light is reflected at the second inner plane 4f by $\delta$ %, and the remaining (100 - $\delta$)% of the light passes through the second inner plane 4f. The light having been reflected at the second inner plane 4f is reflected again at the first inner plane 4e, leaves the prism 4 at the second outer surface 4b, enters the photodiode chip 3, and is received in the rear light-receiving section 3b.

The light having been reflected at the first inner plane 4e and having passed through the second inner plane 4f leaves the prism 4 at the second outer surface 4b, enters the photodiode chip 3, and is received in the central light-receiving section 3p.

A focus error signal FE3 is calculated in accordance with the following equation, based on signals S3b to S3p detected at the light-receiving sections 3b to 3p formed on the light-receiving plane 3a of the photodiode chip 3.

$$FE3 = (S3c - S3d + S3e + S3f - S3g + S3h)/(100 - \delta) - (S3j - S3k + S3l + S3m - S3n + S3o)/100$$

A track error signal TE3 is calculated by a push-pull process in accordance with the following equation.

$$TE3 = (S3c + S3d + S3e\ S3f - S3g - S3h)/(100 - \delta) - (S3j + S3k + S3l - S3m - S3n - S3o)/100$$

A signal indicative of data to be reproduced can be obtained by the signal S3p.

In accordance with the first embodiment, even if the laser diode chip 1 and photodiode chip 3 are deviated in a x-axis direction because of an error in assembly, the beam spots 3r and 3a are uniformly deviated, ensuring no track offset.

In addition, the focus track error signal is not influenced at all, because the front and rear light-receiving sections 3i and 3b do not have a division line parallel to a z-axis.

The first and second inner planes 4e and 4f in the prism 4 are inclined by 45 degrees relative to the first outer surface 4a, and the photodiode chip 3 is inclined by 90 degrees relative to the first outer surface 4a. Hence, even if the sub-mount 2 had a thickness different from a designed thickness, and resultingly, a light-emission point of the laser diode chip 1 is deviated in a y-axis direction relative to the photodiode chip 3, a relative positional relation in a direction of an optical path between the laser diode chip 1 and the photodiode chip 3 is not varied, which ensures no focus offset caused by deviation in relative positional relation between them.

In the optical head in accordance with the first embodiment, the laser diode chip 1 is positioned such that an optical path length between the laser diode chip 1 and the first inner plane 4e is equal to $(a + b + c)/2$ wherein "a" indicates an optical path length between the first inner plane 4e and the rear light-receiving section 3b, "b" indicates an optical path length between the second inner plane 4f and the front light-receiving section 3i, and "c" indicates an optical path length between the first and second inner planes 4e and 4f. Hence, when the medium is located at a light-converging point of the lens, a light having been reflected at the medium is focused onto a point which is at the rear of the front light-receiving section 3i and in front of the rear light-receiving section 3b and at which an optical path length H is equal to $(a - b + 3c)/2$. Accordingly, an optical path length $(c + a)$ between an optical axis of a light emitted from the laser diode chip 1 and the light-receiving plane 3a of the photothode chip 3 is equal to $(2h + 2a + b)/3$, that is, $(2h + b)-2 (2h - a + b)/3$.

In the first conventional optical head, an optical path length $(c + a)$ between an optical axis of a light emitted from the laser diode chip 101 and the light-receiving plane 103a of the photodiode chip 103 is equal to $(2F + b)$, wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b.

If the focus error signal had too low sensitivity, it would be difficult to keep a medium within a depth of focus of a lens by means of a servo. On the other hand, if the focus error signal had too high sensitivity, an optical head had to be assembled with small tolerance. Hence, there exists optimal sensitivity. This optimal sensitivity is determined in dependence on the above-mentioned optical path length h and F. Comparing the optical head in accordance with the first embodiment to the first conventional optical head under the condition that sensitivities of the focus error signals are equal to each other, that is, h is equal to F, $(2h - a + b)$ is greater than zero in the first embodiment, and resultingly, the optical head in accordance with the first embodiment can be formed thinner than the conventional optical head.

In the optical head in accordance with the first embodiment of the present invention, a ratio of a quantity of a light to be received at the central light-receiving section 3p to a quantity of a light reflected at the medium is equal to $(100 - \delta )/2$ %. By setting $\delta$ to be smaller than 50, the ratio can be over 25%. Hence, it is possible to enhance a quality of a signal indicative of data to be reproduced.

In accordance with the first embodiment, since the beam spot 3t is formed in a spot, the central light-receiving section 3p can be formed small. Hence, even if an amplifier is equipped in the photodiode chip 3, it would be possible to detect a signal having a desired frequency, ensuring that the optical head can reproduce data at a high rate.

In the first embodiment, the focus error signal FE3 is detected as variation in a size of the beam spots 3r and 3s in a z-axis direction. Thus, components of the track error signal are expressed as variation in a profile of light quantity in the beam spots 3r and 3s in an x-axis direction. As a result, the track error signal component is unlikely to be mixed to the focus error signal FE3.

It would be possible to detect the focus error signal, the track error signal and the signal indicative of data to be reproduced in other methods by replacing the photodiode chip 3 with another photodiode chip.

**[Example of First Embodiment]**

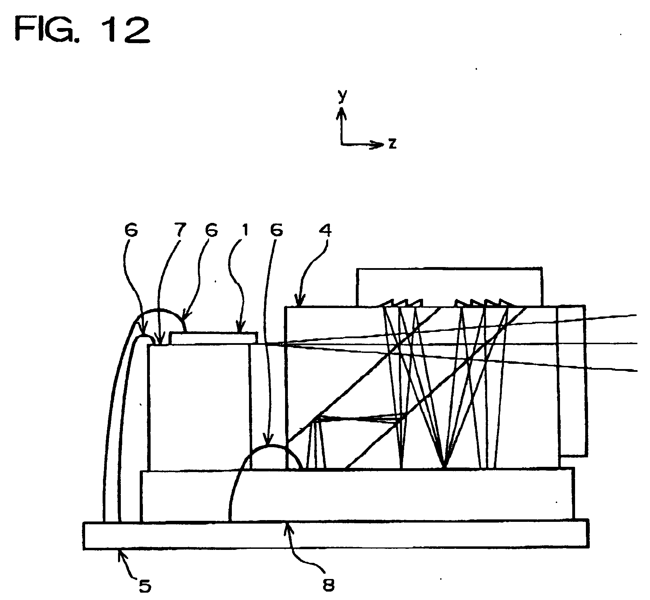

Fig. 12 is a front view of an optical head in accordance with an example of the first embodiment.

In the first embodiment illustrated in Fig. 8, the sub-mount 2 is fixed on the lead frame 5. As an alternative, as illustrated in Fig. 12, a photodiode chip 8 may be formed longer than the photodiode chip 3 in the first embodiment, and the sub-mount 7 may be fixed on the photodiode chip 8. In this arrangement, the laser diode chip 1 and the photodiode chip 8 are more unlikely to be deviated relative to each other in a y-axis direction, because a thickness of the photodiode chip 8 does not exert on a positional relation between the laser diode chip 1 and the photodiode chip 8, than the laser diode chip 1 and the photodiode chip 3.

Though bonding wires 6 are illustrated only for electrically connecting the laser diode chip 1 to the lead frame 5, electrically connecting the sub-mount 2 to the lead frame 5, and electrically connecting the photodiode chip 8 to the lead frame 5, bonding wires 6 are used in other sites where electrical connection is necessary to be made.

In the optical heads illustrated in Figs. 8 and 12, since the photodiode chips 3 and 8 are sandwiched between the prism 4 and the lead frame 5, it is not possible to lastly fix the photothode chips 3 and 8.

Hereinbelow is explained an example of an optical head in which the photodiode chip 3 can be lastly fixed.

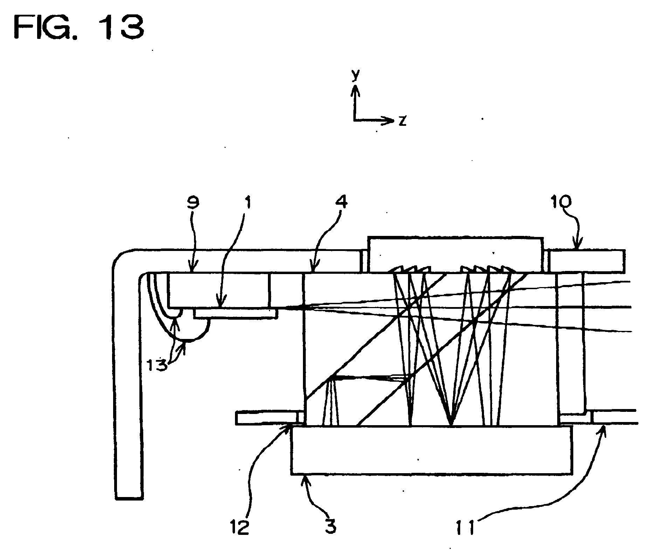

The optical head illustrated in Fig. 13 is designed to include a L-shaped metal-based printing substrate 10 in place of the lead frame 5. The metal-based printing substrate 10 is fixed on an upper surface of the prism 4, and the laser diode chip 1 is fixed on a lower surface of the metal-based printing substrate 10 with a sub-mount 9 being sandwiched therebetween.

The photodiode chip 3 is fixed to a flexible substrate 11 through a bump 12 used for mounting a flip-chip, and is in electrical connection with the flexible substrate 11.

In accordance with the optical head illustrated in Fig. 13, since the photodiode chip 3 can be lastly fixed, it would be possible to readily cancel total errors having been caused in assembly of the optical head before fixing the photodiode chip 3.

A bonding wire 13 electrically connects the laser diode chip 1 to the metal-based base printing substrate 10, and the bump 12 electrically connects the photodiode chip 3 to the flexible substrate 11. Though not illustrated in Fig. 13, bonding wires are used in other sites where electrical connection is necessary to be made.

The photodiode chip 3 is fixed to the flexible substrate 11 through the bump 12. By moving the photodiode chip 3 and the flexible substrate 11 relative to the prism 4, the photodiode chip 3 can be positioned in place with an electric signal being observed.

The sub-mount 9 can be formed thinner than the sub-mount 2 illustrated in Fig. 8 and the sub-mount 7 illustrated in Fig. 12, ensuring enhancement in heat radiation.

In addition, since the bonding-wire 13 can be shorter than the bonding-wires 6 illustrated in Figs. 8 and 12, the bonding -wire 13 can transmit a signal having a higher frequency, and more effectively allows noises from entering a signal.

A lead frame may be employed in place of the metal-based printing substrate 10. For instance, the metal-based printing substrate 10 is comprised of an aluminum substrate, a polyimide film formed on the aluminum substrate, and a wiring composed of copper foil and formed on the polyimide film. Hence, the metal-based printing substrate 10 can much radiate heat therefrom, and can be bent or formed a through-hole therethrough, ensuring higher availability than a lead frame.

As the lens to be used in the first embodiment, there may be used a single finite lens or a combination of a collimate lens and an objective lens. The combination may include a beam splitter located between the collimate lens and the objective lens for separating a light directing to the medium from the laser diode chip 1, or a light directing to the photodiode chip 6 from the medium. This ensures these lights to be parallel lights in the case that the medium is located on a light-converging point of an objective lens. Hence, these lights could be readily dealt with.

The medium mentioned in the first embodiment includes an optical disc, an optical tape and the like, and is composed of phase-change material or photo-electro-magnetic material, for instance.

**[Second Embodiment]**

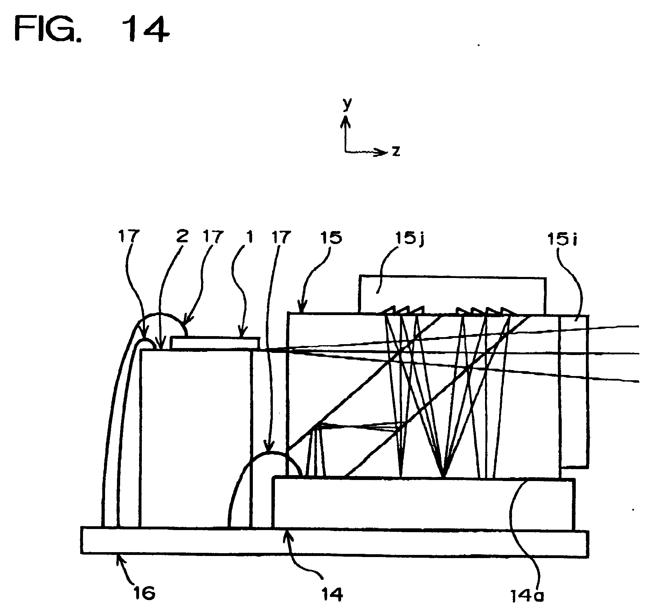

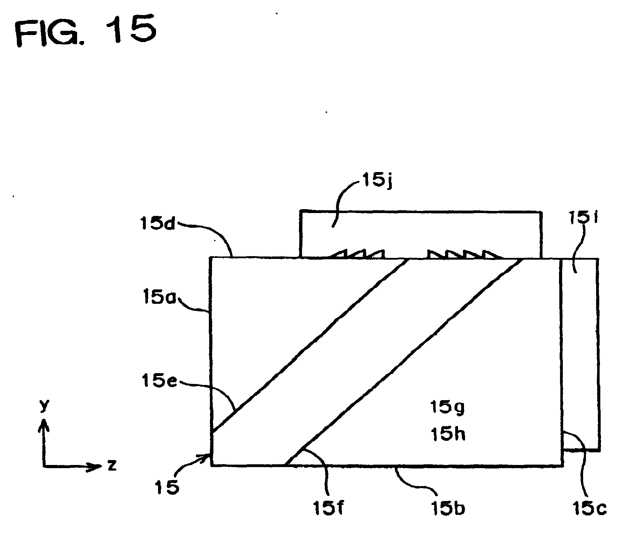

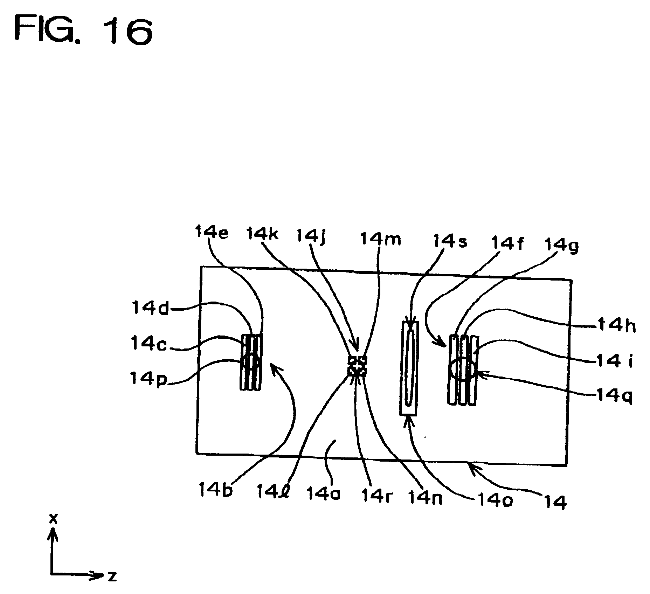

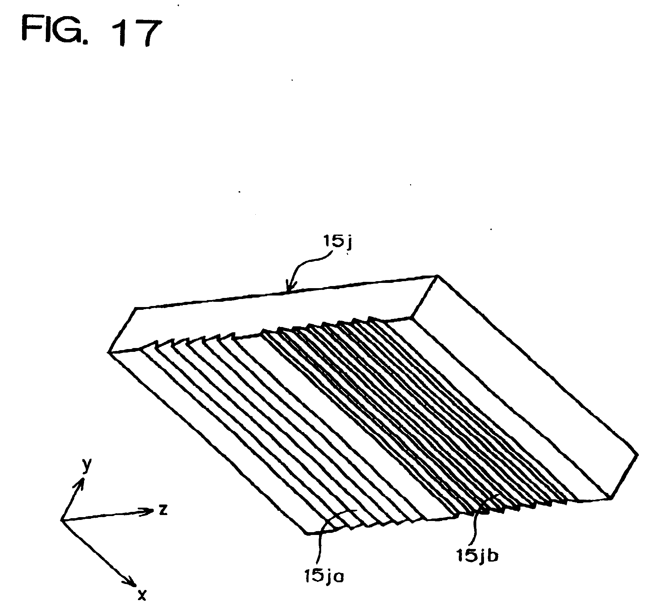

Figs. 14 to 17 illustrate an optical head in accordance with the second embodiment of the present invention. Fig. 14 is a front view of the optical head, Fig. 15 is a front view of the prism used in the optical head, Fig. 16 is a plan view of the photodiode chip used in the optical head, and Fig. 17 is a perspective view of the diffraction type light-converging device used in the optical head.

With reference to Fig. 14, the optical head in accordance with the second embodiment is comprised of a laser diode chip 1, a sub-mount 2 on which the laser diode chip 1 is mounted and which keeps the laser diode chip 1 at a predetermined height, a lens (not illustrated) for focusing a light emitted from the laser diode chip 1, onto a medium (not illustrated), an optical separator or prism 15 for separating a light reflected from the medium, from an optical axis of a light directing to the lens from the laser diode chip 1, a photodiode chip 14 receiving a light separated from the optical axis by means of the prism 15, a quarter wavelength plate 15i located between the prism 15 and the medium and integral with the prism 15, a diffraction type light-converging device 15j lying on an upper surface of the prism 15, and a lead frame 16 on which the sub-mount 2 and the photodiode chip 14 are mounted.

With reference to Fig. 15, the optical separator or prism 15 is a rectangular parallelopiped in shape defined by a first sidewall 15g and a second sidewall 15h in parallel with each other, and first, second, third and fourth outer surfaces 15a, 15b, 15c and 15d all perpendicular to both the first and second sidewalls 15g and 15h. The first and third outer surfaces 15a and 15c are in parallel with each other. The second outer surface 15b is perpendicular to the first outer surface 15a, and is in parallel with the fourth outer surface 15d.

The prism 15 is designed to have first and second inner planes 15e and 15f both perpendicular to the first and second sidewalls 15g and 15h, in parallel with one another, and both inclined relative to the first outer surface 15a at 45 degrees.

The quarter wavelength plate 15i converts a light having passed through the third outer surface 15c of the prism 15 to a circularly polarized light from a linearly polarized light, and also converts a light having been reflected from the medium from a circularly polarized light to a linearly polarized light having an orientation perpendicular to an original orientation.

The quarter wavelength plate 15i may be integral with the prism 15, or may not be integral with the prism 15. The quarter wavelength plate 15i may be positioned anywhere in an optical path between the prism 15 and the medium.

The photodiode chip 14 has a light-receiving plane 14a in parallel with the second outer surface 15b. As illustrated in Fig. 16, a rear light-receiving section 14b, a central light-receiving section 14j, a front light-receiving section 14f and a monitor light-receiving section 14o are formed on the light-receiving plane 14a.

A light having been emitted from the laser diode chip 1 is partially reflected at the first and second inner planes 15e and 15f of the prism 15, reflected at the diffraction type light-converging device 15j, and forms a beam spot 14s on the photodiode chip 14. The monitor light-receiving section 14o is formed in association with the beam spot 14s.

As illustrated in Fig. 17, the diffraction type light-converging device 15j is designed to have a first region 15ja and a second region 15jb.

It is assumed that a first point light source is positioned on a first line passing through a center of the beam spot 14s and extending in parallel with an x-axis, and a second point light source is positioned on a second line passing through a light-emission point of the laser diode chip 1 and extending in parallel with an x-axis. The first region 15ja is designed to have a saw-shaped cross-section in correspondence with interference fringes defined by a light emitted from the first point light source and a light emitted from the second point light source and reflected at the first inner plane 15e. The second region 15jb is designed to have a saw-shaped cross-section in correspondence with interference fringes defined by a light emitted from the first point light source and a light emitted from the second point light source and reflected at the second inner plane 15f.

It is preferable that the saw-shaped cross-sections meet with Bragg's conditions. As an alternative, the saw-shaped cross-sections may be rectangular cross-sections. Though a diffraction efficiency can be varied by varying a depth of the saw, it is preferable to coat the diffraction type light-converging device with a metal or dielectric film for varying a transmission rate in order to prevent generation of unnecessary lights.

Since the interference fringes formed by the first and second point light sources are uniformly located in an x-axis direction, the saws in the diffraction type light-converging device 15j extend uniformly in a x-axis direction, ensuring that the diffraction type light-converging device 15j can be readily fabricated and mounted on the prism 15.

However, the diffraction type light-converging device 15j has light-converging function only in a z-axis direction, and does not have light-converging function in a x-axis direction, resulting in that the beam spot 14s extends in a x-axis direction.

When a light is to be converged also in a x-axis direction, it is necessary to prepare another diffraction type light-converging device having the following function. It is assumed that a first point light source is located at a center of the beam spot 14s, and a second point light source is positioned at a light-emission point of the laser diode chip 1. The first region 15ja is designed to have a saw-shaped cross-section in correspondence with interference fringes defined by a light emitted from the point light source and a light emitted from the second point light source and reflected at the first inner plane 15e. The second region 15jb is designed to have a saw-shaped cross-section in correspondence with interference fringes defined by a light emitted from the first point light source and a light emitted from the second point light source and reflected at the second inner plane 15f.

It is not always necessary to render the diffraction type light-converging device 15j to be integral with the prism 15. However, if they are formed integral with each other, the diffraction type light-converging device 15j can be readily positioned relative to the prism 15.

A light reflected at the medium passes through the prism 15, and reaches the photothode chip 14 as follows.

A light having passed through the second inner plane 15f, reflected at the first inner plane 15e, reflected at the second inner plane 15f, and reflected again at the first inner plane 15e forms a beam spot 14p on the photodiode chip 14. A light having passed through the second inner plane 15f, reflected at the first inner plane 15e, and passed again through the second inner plane 15f forms a beam spot 14r on the photodiode chip 14. A light having been reflected at the second inner plane 15f forms a beam spot 14q on the photodiode chip 14. The rear, central and front light-receiving sections 14b, 14j and 14f are formed in correspondence with the beam spots 14p, 14r and 14q, respectively.

As illustrated in Fig. 16, the front light-receiving section 14f is comprised of three light-receiving sections 14g, 14h and 14i partitioned by partition lines optically parallel to a radial direction of the medium. Similarly, the rear light-receiving section 14b is comprised of three light-receiving sections 14c, 14d and 14e partitioned by partition lines optically parallel to a radial direction of the medium. The central light-receiving section 14j is comprised of four light-receiving sections 14k, 14l, 14m and 14n partitioned by both a partition line optically parallel to a tangential direction of the medium and a partition line optically parallel to a radial direction of the medium.

The laser diode chip 1 is positioned so that an optical path length E between the laser diode chip 1 and the first inner plane 15e meets with the following conditions.

$$E \neq (a + b + c)/2 \text{ and } (b - c) < E < (a + 2c)$$

wherein "a" indicates an optical path length between the first inner plane 15e and the rear light-receiving section 14b, "b" indicates an optical path length between the second inner plane 15f and the front light-receiving section 14f, and "c" indicates an optical path length between the first and second inner planes 15e and 15f.

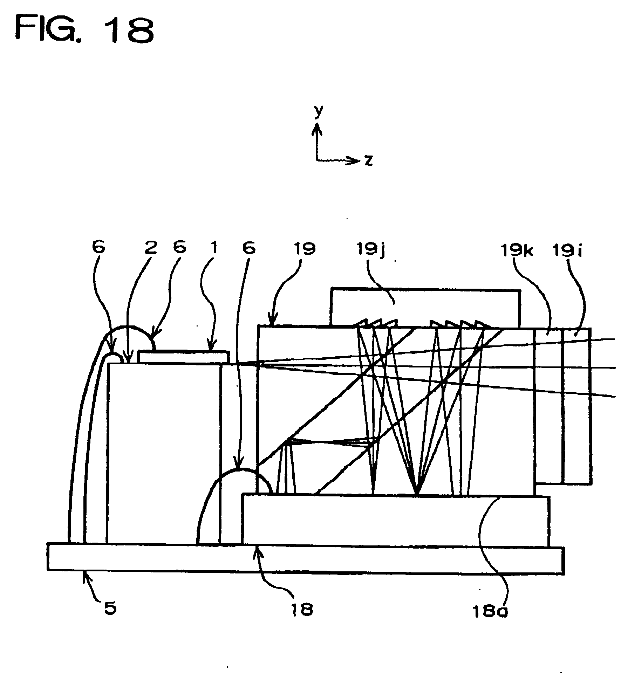

By setting the optical path length E to meet with the above-mentioned conditions, the central light-receiving section 14j is located at not near-field, but far-field. In a later mentioned third embodiment illustrated in Figs. 18 to 21, the laser diode chip 1 is located optically closer to the rear light-receiving section 14b than the front light-receiving section 14f.

The optical head in accordance with the second embodiment operates as follows.

A light emitted from the laser diode chip 1 and polarized in a y-axis direction enters the prism 15 through the first outer surface 15a so that an optical axis thereof is perpendicular to the first outer surface 15a. The light is reflected at the first and second inner planes 15e and 15f by a couple of percents, and leaves the prism 15 at the third outer surface 15c with an optical axis thereof being perpendicular to the third outer surface 15c. The light having been reflected at the first and second inner planes 15e and 15f by a couple of percents leaves the prism 15 through the fourth outer surface 15d, is reflected at the diffraction type light-converging device 15j, and enters the prism 15 again through the fourth outer surface 15d. Then, the light passes through the first and second inner planes 15e and 15f, leaves the prism 15 through the second outer surface 15b, enters the photodiode chip 14, and is received in the monitor light-receiving section 14o.

A quantity of a light emitted from the laser diode chip 1 varies with the lapse of time and in dependence on a temperature, but can be controlled to a desired quantity by virtue of a signal detected in the monitor light-receiving section 14o.

By forming a light-receiving section with the sub-mount 2, it would be possible to measure a quantity of a light emitted from the laser diode chip 1 at the rear thereof. However, since a ratio between quantities of lights emitted from the laser diode chip 1 at the front and rear thereof varies while the optical head is in operation, it is preferable to measure a quantity of a light emitted from the laser diode chip 1 at the front thereof which light is used for actual reproduction of data.

There may be employed a photodiode chip in place of the diffraction type light-converging device 15j.

The diffraction type light-converging device 15j may be sealed into a package which is a protector of the optical head from moisture and dust. Since the diffraction type light-converging device 15j is integral with the package, diffraction type light-converging device 15j does not constitute a hindrance for making the optical head thin.

The light having been converted into a circularly polarized light in the quarter wavelength plate 15i is focused onto the medium through the lens (not illustrated).

The light having been reflected by the medium advances on the same optical path in an opposite direction, and is converted by the quarter wavelength plate 15i into a light polarized in an x-axis direction. Then, the light enters the prism 15 at the third outer surface 15c with an optical axis thereof being perpendicular to the third outer surface 15c.

The light having entered the prism 15 is reflected at the second inner plane 15f by $\delta$ %, and the remaining $(100 - \delta)$% of the light passes through the second inner plane 15f.

The light having passed through the second inner plane 15f is reflected at the first inner plane 15e. Then, the light is reflected at the second inner plane 15f by $\delta$ %, and the remaining $(100 - \delta)$% of the light passes through the second inner plane 15f. The light having been reflected at the second inner plane 15f is reflected again at the first inner plane 15e, leaves the prism 15 at the second outer surface 15b, enters the photodiode chip 14, and is received in the rear light-receiving section 14b.

The light having been reflected at the first inner plane 15e and having passed through the second inner plane 15f leaves the prism 15 at the second outer surface 15b, enters the photodiode chip 14, and is received in the central light-receiving section 14j.

A focus error signal FE14 is calculated in accordance with the following equation, based on signals S14b to S14n detected at the light-receiving sections 14b to 14n formed on the light-receiving plane 14a of the photodiode chip 14.

$$FE14 = (S14c - S14d + S14e)/(100 - \delta) - (S14g - S14h + S14i)/100$$

It should be noted that the laser diode chip 1 is located optically between the front light-receiving section 14f and the rear light-receiving section 14b, but is not located at the center therebetween, and hence, the beam spots 14q and 14p do not have the same spot size, when the medium is located at a light-converging point of the lens. Hence, the front light-receiving section 14f and the rear light-receiving section 14b are designed to have sizes in proportion to sizes which the beam spots 14q and 14p have when the medium is located at a light-converging point of the lens.

A track error signal TE14 is calculated by a push-pull process in accordance with the following equation.

$$TE14 = (S14k + S14m) - (S14l + S14n)$$

The track error signal TE14 can be calculated also by a phase difference process or heterodyne process as follows.

$$TE14 = \text{Phase difference between } (S14k + S14n) \text{ and } (S14l + S14m)$$

A signal indicative of data to be reproduced can be calculated as a sum of signals S14k, S14l, S14m and S14n (S14k + S14l + S14m + S14n )

In accordance with the second embodiment, even if the laser diode chip 1 and photodiode chip 14 are deviated in a x-axis direction because of an error in assembly, the beam spot 14r can be moved to a center of the central light-receiving section 14j by rotating the prism 15 in x-z plane, ensuring no track offset. In addition, even if the prism 15 is rotated in x-z plane, since a division line parallel to a z-axis does not exist in the front light-receiving section 14f and rear light-receiving section 14b, the focus track error signal is not influenced at all.

The first and second inner planes 15e and 15f in the prism 15 are inclined by 45 degrees relative to the first outer surface 15a, and the photodiode chip 14 is inclined by 90 degrees relative to the first outer surface 15a. Hence, even if the sub-mount 2 had a thickness different from a designed thickness, and resultingly, a light-emission point of the laser diode chip 1 is deviated in a y-axis direction relative to the photodiode chip 14, a relative positional relation in a direction of an optical path between the laser diode chip 1 and the photodiode chip 14 is not varied, which ensures no focus offset caused by deviation in relative positional relation between them.

In the optical head in accordance with the second embodiment, the laser diode chip 1 is positioned such that an optical path length E between the laser diode chip 1 and the first inner plane 15e meets with the following conditions.

$$E \neq (a + b + c)/2 \text{ and } (b - c) < E < (a + 2c)$$

In the conditions, "a" indicates an optical path length between the first inner plane 15e and the rear light-receiving section 14b, "b" indicates an optical path length between the second inner plane 15f and the front light-receiving section 14f, and "c" indicates an optical path length between the first and second inner planes 15e and 15f.

Hence, when the medium is located at a light-converging point of the lens, a light having been reflected at the medium is focused onto both a point which is at the rear of the front light-receiving section 14f and at which an optical path length I is equal to ( E - b + c ), and a point which is in front of the rear light-receiving section 14b and at which an optical path length J is equal to (- E + a + 2c ). Accordingly, an optical path length (c + a) between an optical axis of a light emitted from the laser diode chip 1 and the light-receiving plane 14a of the photodiode chip 14 is equal to (I + J + 2a +b)/3 , that is, (I + J + b)-2 (I + J - a + b)/3 .

In the first conventional optical head, an optical path length (c + a) between an optical axis of a light emitted from the laser diode chip 101 and the light-receiving plane 103a of the photodiode chip 103 is equal to (2F + b), wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b.

If the focus error signal had too low sensitivity, it would be difficult to keep a medium within a depth of focus of a lens by means of a servo. On the other hand, if the focus error signal had too high sensitivity, an optical head had to be assembled with small tolerance. Hence, there exists optimal sensitivity. This optimal sensitivity is determined in dependence on the above-mentioned I, J and F. Comparing the optical head in accordance with the second embodiment to the first conventional optical head under the condition where sensitivities of the focus error signals are equal to each other, that is, (I + J)/2 = F , (I + J - a + b ) is generally greater than zero, and resultingly, the optical head in accordance with the second embodiment can be formed thinner than the first conventional optical head.

When the second embodiment is applied to a push-pull process, a ratio of a quantity of a light to be received at each of the light-receiving sections to a quantity of a light reflected at the medium is over 25%, when δ is smaller than 29 (δ < 29), by combining the light-receiving sections 14k and 14m together and the light-receiving sections 14l and 14n together. Similarly, when the second embodiment is applied to a phase difference process or heterodyne process, a ratio of a quantity of a light to be received at each of the light-receiving sections to a quantity of a light reflected at the medium is over 25%, when δ is smaller than 29 (δ < 29), by combining the light-receiving sections 14k and 14n together and the light-receiving sections 14l and 14m together. Hence, it is possible to enhance a quality of a signal indicative of data to be reproduced.

When the second embodiment is applied to both a push-pull process and a phase difference process or heterodyne process, a ratio of a quantity of a light to be received at the light-receiving sections 14k to 14n to a quantity of a light reflected at the medium is equal to 20%, when δ is equal to 10. Hence, it is possible to enhance a quality of a signal indicative of data to be reproduced.

In accordance with the second embodiment, since the beam spot 14r is formed in a circle, the central light-receiving section 14j can be formed small. Hence, even if an amplifier is equipped in the photodiode chip 14, it would be possible to detect a signal having a desired frequency, ensuring that the optical head can reproduce data at a high rate.

In the second embodiment, the focus error signal FE14 is detected as variation in a size of the beam spots 14p and 14q in a z-axis direction. Thus, components of the track error signal are expressed as variation in a profile of light quantity in the beam spots 14p and 14q in an x-axis direction. As a result, the track error signal component is unlikely to be mixed to the focus error signal FE14.

It would be possible to detect the focus error signal, the track error signal and the signal indicative of data to be reproduced in other methods by replacing the photodiode chip 14 with another photodiode chip.

**[Example of Second Embodiment]**

In the second embodiment illustrated in Fig. 14, the sub-mount 2 is fixed on the lead frame 16. By designing the optical head to have the same structure as that of the example of the first embodiment illustrated in Fig. 12, it would be possible to fix the sub-mount 2 on the photodiode chip 14.

Though bonding wires 17 are illustrated only for electrically connecting the laser diode chip 1 to the lead frame 16 and electrically connecting the photodiode chip 14 to the lead frame 16, bonding wires 17 are used in other sites where electrical connection is necessary to be made.

In the optical heads illustrated in Fig. 14, since the photodiode chip 14 is sandwiched between the prism 15 and the lead frame 16, it is not possible to lastly fix the photodiode chip 14. However, by designing the optical head to have the same structure as that of the example of the first embodiment, the photodiode chip 14 can be lastly fixed.

As the lens to be used in the second embodiment, there may be used a single finite lens or a combination of a collimate lens and an objective lens. The combination may include a beam splitter located between the collimate lens and the objective lens for separating a light directing to the medium from the laser diode chip 1, or a light directing to the photodiode chip 14 from the medium. This ensures these lights to be parallel lights in the case that the medium is located on a light-converging point of an objective lens. Hence, these lights could be readily dealt with.

The medium mentioned in the second embodiment includes an optical disc, an optical tape and the like, and is composed of phase-change material or photo-electro-magnetic material, for instance.

**[Third Embodiment]**

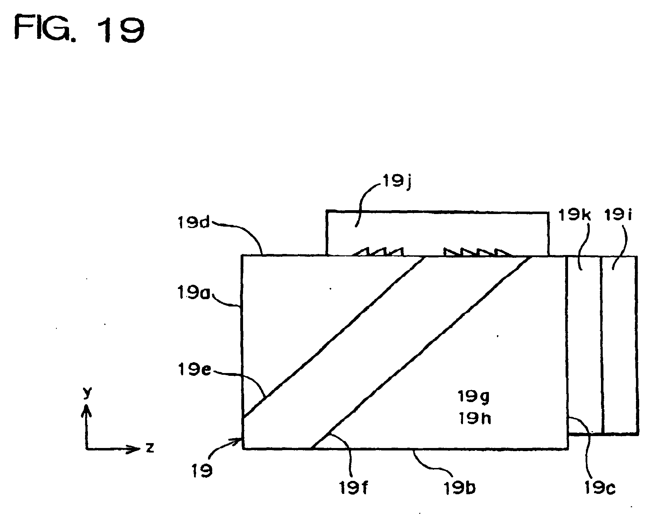

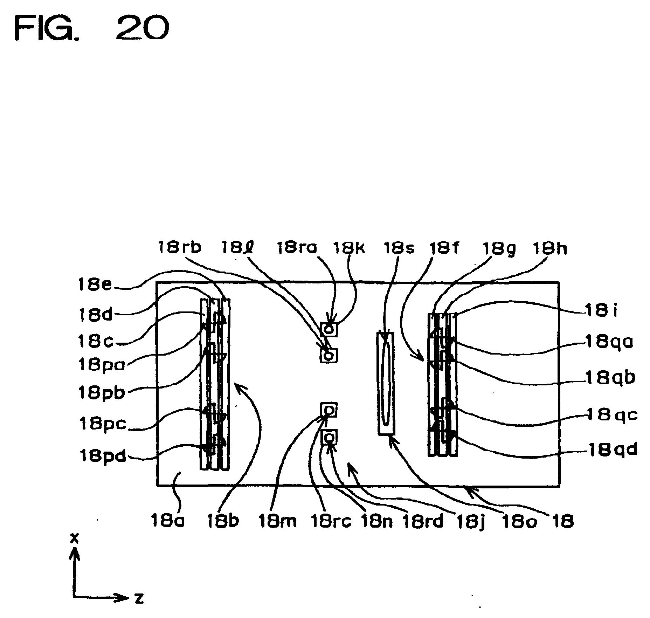

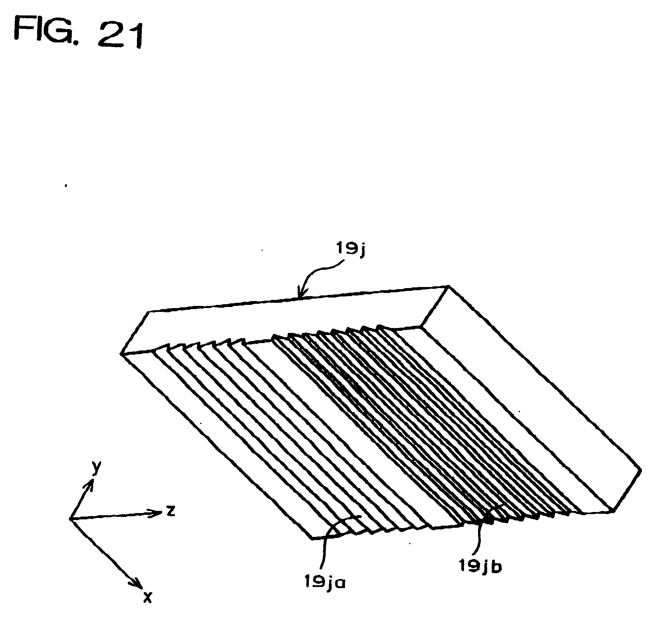

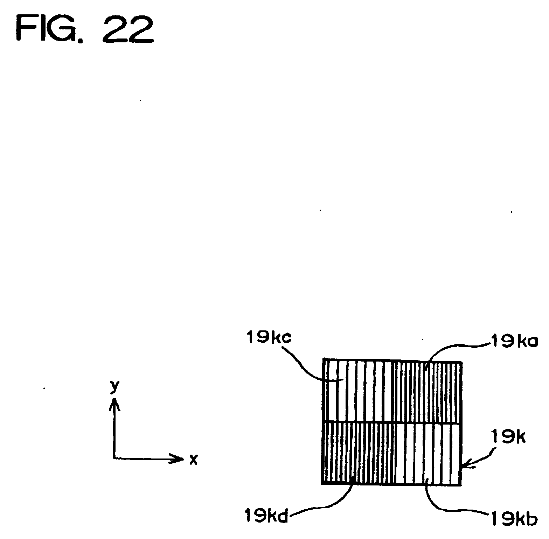

Figs. 18 to 22 illustrate an optical head in accordance with the third embodiment of the present invention. Fig. 18 is a front view of the optical head, Fig. 19 is a front view of the prism used in the optical head, Fig. 20 is a plan view of the photodiode chip used in the optical head, Fig. 21 is a perspective view of the diffraction type light-converging device used in the optical head, and Fig. 22 is a right side view of a four-divisional grating used in the optical head.

With reference to Fig. 18, the optical head in accordance with the third embodiment is comprised of a laser diode chip 1, a sub-mount 2 on which the laser diode chip 1 is mounted and which keeps the laser diode chip 1 at a predetermined height, a lens (not illustrated) for focusing a light emitted from the laser diode chip 1, onto a medium (not illustrated), an optical separator or prism 19 for separating a light reflected from the medium, from an optical axis of a light directing to the lens from the laser diode chip 1, a photodiode chip 18 receiving a light separated from the optical axis by means of the prism 4, a four-divisional grating 19k acting as a diffraction device and positioned in facing relation to the third outer surface 19c of the prism 19, a quarter wavelength plate 19i located in contact with the four-divisional grating 19k, a diffraction type light-converging device 19j lying on an upper surface of the prism 19, and a lead frame 5 on which the sub-mount 2 and the photodiode chip 18 are mounted.

With reference to Fig. 19, the optical separator or prism 19 is a rectangular parallelopiped in shape defined by a first sidewall 19g and a second sidewall 19h in parallel with each other, and first, second, third and fourth outer surfaces 19a, 19b, 19c and 19d all perpendicular to both the first and second sidewalls 19g and 19h. The first and third outer surfaces 19a and 19c are in parallel with each other. The second outer surface 19b is perpendicular to the first outer surface 19a, and is in parallel with the fourth outer surface 19d.

The prism 19 is designed to have first and second inner planes 19e and 19f both perpendicular to the first and second sidewalls 19g and 19h, in parallel with one another, and both inclined relative to the first outer surface 19a at 45 degrees.

As illustrated in Fig. 22, the four-divisional grating 19k is formed with stripes in grid, defined by lines extending in parallel with a y-axis and spaced away from adjacent ones by almost the same spacing as a wavelength of a light emitted from the laser diode chip 1. The stripes are formed in four regions partitioned by both a partition line extending in a x-axis direction and a partition line extending in a y-axis direction, that is, a first region 19ka, a second region 19kb, a third region 19kc and a fourth region 19kd. A spacing between the stripes in the first region 19ka is equal to a spacing between the stripes in the fourth region 19kd located diagonally to the first region 19ka. Similarly, a spacing between the stripes in the second region 19kb is equal to a spacing between the stripes in the third region 19kc located diagonally to the second region 19kb.

It is not always necessary for the four-divisional grating 19k to be integral with the prism 19. The four-divisional grating 19k may be positioned anywhere in an optical path between the prism 19 and the quarter wavelength plate 19i.

The quarter wavelength plate 19i converts a light having emitted from the four-divisional grating 19k of the prism 19 to a circularly polarized light from a linearly polarized light, and also converts a light having been reflected from the medium from a circularly polarized light to a linearly polarized light having an orientation perpendicular to an original orientation.

The quarter wavelength plate 19i may be integral with the prism 19, or may not be integral with the prism 19. The quarter wavelength plate 19i may be positioned anywhere in an optical path between the four-divisional grating 19k and the medium.

The photodiode chip 18 has a light-receiving plane 18a in parallel with the second outer surface 19b. As illustrated in Fig. 20, a rear light-receiving section 18b, a central light-receiving section 18j, a front light-receiving section 18f and a monitor light-receiving section 18o are formed on the light-receiving plane 18a.

A light having been emitted from the laser diode chip 1 is partially reflected at the first and second inner planes 19e and 19f of the prism 19, reflected at the diffraction type light-converging device 19j, and forms a beam spot 18s on the photodiode chip 18. The monitor light-receiving section 18o is formed in association with the beam spot 18s.

As illustrated in Fig. 22, the diffraction type light-converging device 19j is designed to have a first region 19ja and a second region 19jb.

It is assumed that a first point light source is positioned on a first line passing through a center of the beam spot 18s and extending in parallel with an x-axis, and a second point light source is positioned on a second line passing through a light-emission point of the laser diode chip 1 and extending in parallel with an x-axis. The first region 19ja is designed to have a saw-shaped cross-section in correspondence with interference fringes defined by a light emitted from the first point light source and a light emitted from the second point light source and reflected at the first inner plane 19e. The second region 19jb is designed to have a saw-shaped cross-section in correspondence with interference fringes defined by a light emitted from the first point light source and a light emitted from the second point light source and reflected at the second inner plane 19f.

It is preferable that the saw-shaped cross-sections meet with Bragg's conditions. As an alternative, the saw-shaped cross-sections may be rectangular cross-sections. Though a diffraction efficiency can be varied by varying a depth of the saw, it is preferable to coat the diffraction type light-converging device with a metal or dielectric film for varying a transmission rate in order to prevent generation of unnecessary lights.

Since the interference fringes formed by the first and second point light sources are uniformly located in an x-axis direction, the saws in the diffraction type light-converging device 19j extend uniformly in a x-axis direction, ensuring that the diffraction type light-converging device 19j can be readily fabricated and mounted on the prism 19.

However, the diffraction type light-converging device 19j has light-converging function only in a z-axis direction, and does not have light-converging function in a x-axis direction, resulting in that the beam spot 18s extends in a x-axis direction.

When a light is to be converged also in a x-axis direction, it is necessary to prepare another diffraction type light-converging device having the following function. It is assumed that a first point light source is located at a center of the beam spot 18s, and a second point light source is positioned at a light-emission point of the laser diode chip 1. The first region 19ja is designed to have a saw-shaped cross-section in correspondence with interference fringes defined by a light emitted from the point light source and a light emitted from the second point light source and reflected at the first inner plane 19e. The second region 19jb is designed to have a saw-shaped cross-section in correspondence with interference fringes defined by a light emitted from the first point light source and a light emitted from the second point light source and reflected at the second inner plane 19f.

It is not always necessary to render the diffraction type light-converging device 19j to be integral with the prism 19. However, if they are formed integral with each other, the diffraction type light-converging device 19j can be readily positioned relative to the prism 19.

A light reflected at the medium passes through the prism 19, and reaches the photodiode chip 18 as follows.

A light having passed through the second inner plane 19f, reflected at the first inner plane 19e, reflected at the second inner plane 19f, and reflected again at the first inner plane 19e forms beam spots 18pa, 18pb, 18pc and 18pd on the photodiode chip 18. A light having passed through the second inner plane 19f, reflected at the first inner plane 19e, and passed again through the second inner plane 19f forms beam spots 18ra, 18rb, 18rc and 18rd on the photodiode chip 18. A light having been reflected at the second inner plane 19f forms beam spots 18qa, 18qb, 18qc and 18qd on the photodiode chip 18. The rear, central and front light-receiving sections 18b, 18j and 18f are formed in correspondence with the beam spots 18pa to 18pd, 18ra to 18rd, and 18qa to 18qd, respectively.

The beam spots 18pa, 18pd, 18ra, 18rd, 18qa and 18qd are formed by lights diffracted at the first region 19ka of the four-divisional grating 19k, and the beam spots 18pb, 18pc, 18rb, 18rc, 18qb and 18qc are formed by lights diffracted at the second region 19kb of the four-divisional grating 19k.

As illustrated in Fig. 20, the front light-receiving section 18f is comprised of three light-receiving sections 18g, 18h and 18i partitioned by two partition lines optically parallel to a radial direction of the medium. Similarly, the rear light-receiving section 18b is comprised of three light-receiving sections 18c, 18d and 18e partitioned by two partition lines optically parallel to a radial direction of the medium. The central light-receiving section 18j is comprised of four light-receiving sections 18k, 18l, 18m and 18l.

The laser diode chip 1 is positioned so that an optical path length between the laser diode chip 1 and the first inner plane 19e is equal to (a + b + c) /2 wherein "a" indicates an optical path length between the first inner plane 19e and the rear light-receiving section 18b, "b" indicates an optical path length between the second inner plane 19f and the front light-receiving section 18f, and "c" indicates an optical path length between the first and second inner planes 19e and 19f.

The optical head in accordance with the third embodiment operates as follows.

A light emitted from the laser diode chip 1 and polarized in a y-axis direction enters the prism 19 through the first outer surface 19a so that an optical axis thereof is perpendicular to the first outer surface 19a. The light is reflected at the first and second inner planes 19e and 19f by a couple of percents, and leaves the prism 19 at the third outer surface 19c with an optical axis thereof being perpendicular to the third outer surface 19c. The light having been reflected at the first and second inner planes 19e and 19f by a couple of percents leaves the prism 19 through the fourth outer surface 19d, is reflected at the diffraction type light-converging device 19j, and enters the prism 19 again through the fourth outer surface 19d. Then, the light passes through the first and second inner planes 19e and 19f, leaves the prism 19 through the second outer surface 19b, enters the photodiode chip 18, and is received in the monitor light-receiving section 18o.

A quantity of a light emitted from the laser diode chip 1 varies with the lapse of time and in dependence on a temperature, but can be controlled to a desired quantity by virtue of a signal detected in the monitor light-receiving section 18o.

By forming a light-receiving section with the sub-mount 2, it would be possible to measure a quantity of a light emitted from the laser diode chip 1 at the rear thereof. However, since a ratio between quantities of lights emitted from the laser diode chip 1 at the front and rear thereof varies while the optical head is in operation, it is preferable to measure a quantity of a light emitted from the laser diode chip 1 at the front thereof which light is used for actual reproduction of data.

It would be possible to detect a signal by replacing the diffraction type light-converging device 19j with a photodiode chip.

The diffraction type light-converging device 19j may be sealed into a package which is a protector of the optical head from moisture and dust. Since the diffraction type light-converging device 19j is integral with the package, diffraction type light-converging device 19j does not constitute a hindrance for making the optical head thin.

The light having passed through the four-divisional grating 19k is converted into a circularly polarized light in the quarter wavelength plate 19i, and focused onto the medium through the lens (not illustrated).

The light having been reflected by the medium advances on the same optical path in an opposite direction, and is converted by the quarter wavelength plate 19i into a light polarized in an x-axis direction, and then, is diffracted at the four-divisional grating 19k.

The light having been diffracted by four-divisional grating 19k is reflected at the second inner plane 19f by $\delta$ %, and the remaining (100 - $\delta$)% of the light passes through the second inner plane 19f.

The light having been reflected at the second inner plane 19f leaves the prism 19 through the second outer surface 19b, enters the photodiode chip 18, and is received in the front light-receiving section 18f.

The light having passed through the second inner plane 19f is reflected at the first inner plane 19e. Then, the light is reflected at the second inner plane 19f by $\delta$ %, and the remaining (100- $\delta$)% of the light passes through the second inner plane 19f. The light having been reflected at the second inner plane 19f is reflected again at the first inner plane 19e, leaves the prism 19 at the second outer surface 19b, enters the photodiode chip 18, and is received in the rear light-receiving section 18b.

The light having been reflected at the first inner plane 19e and having passed through the second inner plane 19f leaves the prism 19 at the second outer surface 19b, enters the photodiode chip 18, and is received in the central light-receiving section 18j.

A focus error signal FE18 is calculated in accordance with the following equation, based on signals S18b to S18n detected at the light-receiving sections 18b to 18n formed on the light-receiving plane 18a of the photodiode chip 18.

$$FE18 = (S18c - S18d + S18e)/(100 - \delta) - (S18g - S18h + S18i)/100$$

A track error signal TE18 is calculated by a phase difference process or heterodyne process in accordance with the following equation.

$$TE18 = \text{Phase difference between } (S18k + S18n) \text{ and } (S181 + S18m)$$

A signal indicative of data to be reproduced can be obtained as a sum of signals S18k, S 18l, S18m and S18n ( S18k + S18l + S18m + S18n ).

In accordance with the third embodiment, even if the laser diode chip 1 and photodiode chip 18 are deviated in a x-axis direction because of an error in assembly, there is not generated track offset, unless the beam spots 18ra to 18rd are formed out of the light-receiving sections 18k to 18n.

In addition, the focus track error signal is not influenced at all, because the front light-receiving section 18f and the rear light-receiving section 18b do not have a division line parallel to a z-axis.

Even if the four-divisional grating 19k is deviated in a x- or y-axis direction, since the two regions diagonally located are associated with each other, ensuring no track offset.

In the four-divisional grating 19k, if an oscillation wavelength of the laser diode chip 1 varies due to variation in a temperature, for instance, a diffraction angle of a diffracted light also varies, resulting in that the beam spots 18pa to 18rd are deviated in a x-axis direction. However, since any one of the beam spots 18pa to 18rd is not across a plurality of the light-receiving sections in a z-axis direction, the optical head in accordance with the third embodiment is not influenced by variation in a diffraction angle.

The first and second inner planes 19e and 19f in the prism 19 are inclined by 45 degrees relative to the first outer surface 19a, and the photodiode chip 18 is inclined by 90 degrees relative to the first outer surface 19a. Hence, even if the sub-mount 2 had a thickness different from a designed thickness, and resultingly, a light-emission point of the laser diode chip 1 is deviated in a y-axis direction relative to the photodiode chip 18, a relative positional relation in a direction of an optical path between the laser diode chip 1 and the photodiode chip 18 is not varied, which ensures no focus offset caused by deviation in relative positional relation between them.

In the optical head in accordance with the third embodiment, the laser diode chip 1 is positioned such that an optical path length between the laser diode chip 1 and the first inner plane 19e is equal to $(a + b + c)/2$ wherein "a" indicates an optical path length between the first inner plane 19e and the rear light-receiving section 18b, "b" indicates an optical path length between the second inner plane 19f and the front light-receiving section 18f, and "c" indicates an optical path length between the first and second inner planes 19e and 19f. Hence, when the medium is located at a light-converging point of the lens, a light having been reflected at the medium is focused onto a point which is at the rear of the front light-receiving section 18f and in front of the rear light-receiving section 18b and at which an optical path length K is equal to $(a-b + 3c)/2$. Accordingly, an optical path length $(c + a)$ between an optical axis of a light emitted from the laser diode chip 1 and the light-receiving plane 18a of the photodiode chip 18 is equal to $(2K + 2a + b)/3$, that is, $(2K + b) - 2 (2K-a + b)/3$.

In the first conventional optical head, an optical path length $(c + a)$ between an optical axis of a light emitted from the laser diode chip 101 and the light-receiving plane 103a of the photodiode chip 103 is equal to $(2F + b)$, wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b.

If the focus error signal had too low sensitivity, it would be difficult to keep a medium within a depth of focus of a lens by means of a servo. On the other hand, if the focus error signal had too high sensitivity, an optical head had to be assembled with small tolerance. Hence, there exists optimal sensitivity. This optimal sensitivity is determined in dependence on the above-mentioned optical path length K and F. Comparing the optical head in accordance with the third embodiment to the first conventional optical head under the condition that sensitivities of the focus error signals are equal to each other, that is, K is equal to F, $(2K - a + b )$ is greater than zero in the third embodiment, and resultingly, the optical head in accordance with the first embodiment can be formed thinner than the conventional optical head.

In the optical head in accordance with the third embodiment, a ratio of a quantity of a light to be received at each one of the central light-receiving sections to a quantity of a light reflected at the medium is over 25%, when δ is smaller than 29 ($\delta < 29$), by combining the light-receiving sections 18k and 18n together and the light-receiving sections 181 and 18m together. Hence, it is possible to enhance a quality of a signal indicative of data to be reproduced.

In accordance with the third embodiment, since the beam spots 18ra to 18rd are formed in a spot, the light-receiving sections 18k to 18n can be formed small. Hence, even if an amplifier is equipped in the photodiode chip 18, it would be possible to detect a signal having a desired frequency, ensuring that the optical head can reproduce data at a high rate.

In the third embodiment, the focus error signal FE18 is detected as variation in a size of the beam spots 18pa to 18pd and 18qa to 18qd in a z-axis direction. Thus, components of the track error signal are expressed as variation in a profile of light quantity in the beam spots 18pa to 18pd and 18qa to 18qd in an x-axis direction. As a result, the track error signal component is unlikely to be mixed to the focus error signal FE18.

It would be possible to detect the focus error signal, the track error signal and the signal indicative of data to be reproduced in other methods by replacing the photodiode chip 18 with another photodiode chip.

**[Example of Third Embodiment]**

The four-divisional grating 19k may be comprised of a device composed of lithium niobate crystal on which grid-like stripes are formed in dependence on whether proton is exchanged or not. Namely, the four-divisional grating 19k utilizes the fact that an index ellipsoid is deformed, if proton exchange is applied to lithium niobate crystal. A phase difference between dielectric films deposited on a region to which proton exchange is applied, and a portion to which proton exchange is not applied is multiplied by Nπ for a light polarized in a y-axis direction, and multiplied by Mπ for a light polarized in a x-axis direction, wherein N is an even integer and M is an odd integer. As a result, the four-divisional grating 19k can be designed to allow a light polarized in a y-axis direction to pass therethrough, and a light polarized in an x-axis direction to diffract and pass therethrough.

In the third embodiment illustrated in Fig. 18, the sub-mount 2 is fixed on the lead frame 5. By designing the optical head to have the same structure as that of the example of the first embodiment illustrated in Fig. 12, it would be possible to fix the sub-mount 2 on the photodiode chip 18.

Though bonding wires 6 are illustrated only for electrically connecting the laser diode chip 1 to the lead frame 5 and electrically connecting the photodiode chip 18 to the lead frame 5, bonding wires 6 are used in other sites where electrical connection is necessary to be made.

In the optical heads illustrated in Fig. 18, since the photodiode chip 18 is sandwiched between the prism 19 and the lead frame 5, it is not possible to lastly fix the photothode chip 18. However, by designing the optical head to have the same structure as that of the example of the first embodiment, illustrated in Fig. 13, the photodiode chip 18 can be lastly fixed.

As the lens to be used in the third embodiment, there may be used a single finite lens or a combination of a collimate lens and an objective lens. The combination may include a beam splitter located between the collimate lens and the objective lens for separating a light directing to the medium from the laser diode chip 1, or a light directing to the photodiode chip 18 from the medium. This ensures these lights to be parallel lights in the case that the medium is located on a light-converging point of an objective lens. Hence, these lights could be readily dealt with.

The medium mentioned in the third embodiment includes an optical disc, an optical tape and the like, and is composed of phase-change material or photo-electro-magnetic material, for instance.

**[Fourth Embodiment]**

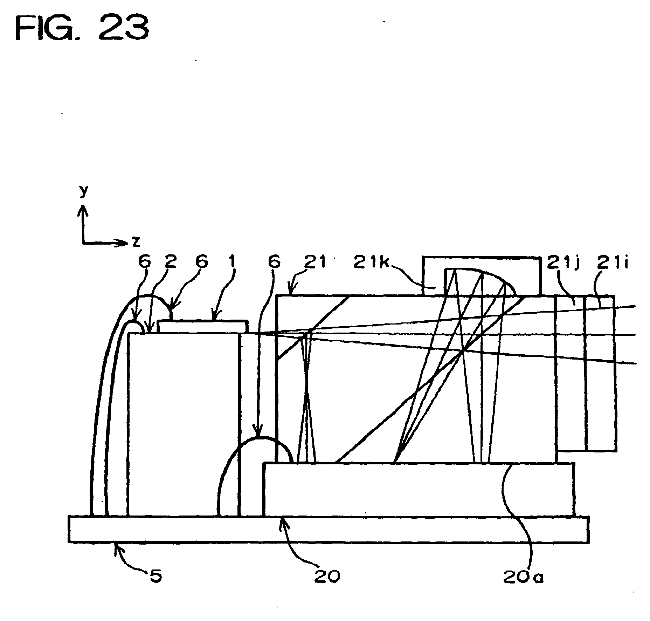

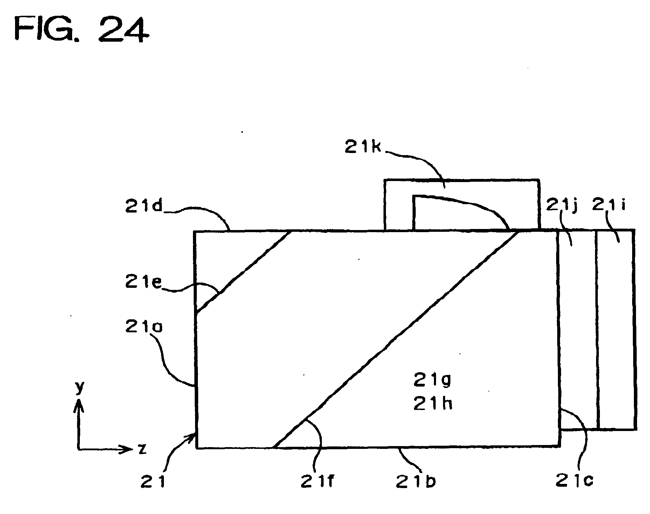

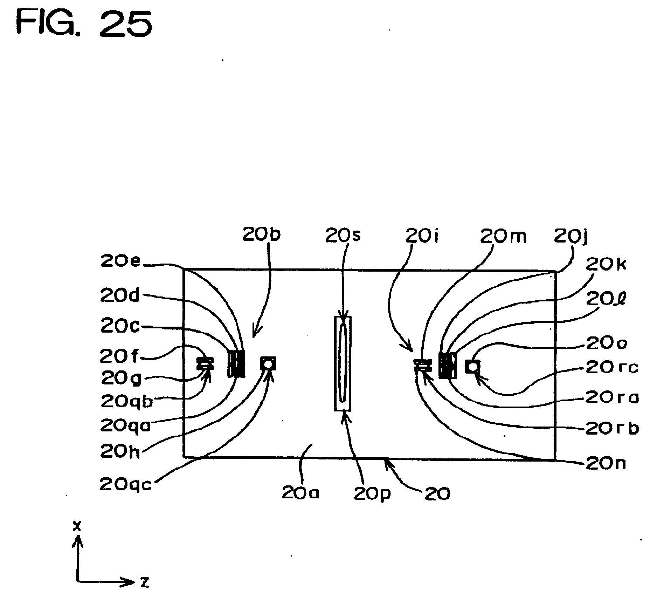

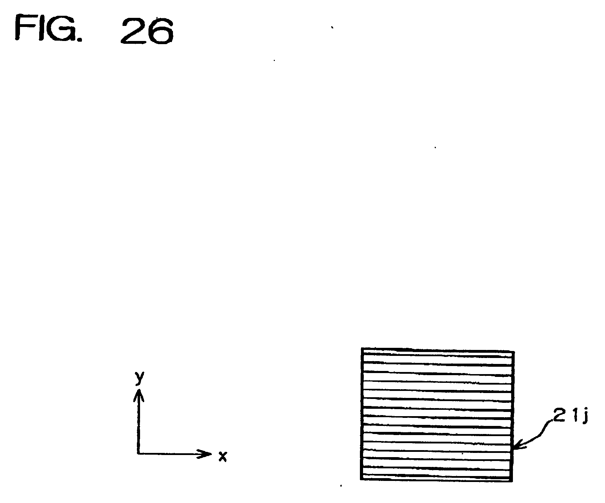

Figs. 23 to 26 illustrate an optical head in accordance with the fourth embodiment of the present invention. Fig. 23 is a front view of the optical head, Fig. 24 is a front view of the prism used in the optical head, Fig. 25 is a plan view of the photodiode chip used in the optical head, and Fig. 26 is a right side view of a grating used in the optical head.

With reference to Fig. 23, the optical head in accordance with the fourth embodiment is comprised of a laser diode chip 1, a sub-mount 2 on which the laser diode chip 1 is mounted and which keeps the laser diode chip 1 at a predetermined height, a lens (not illustrated) for focusing a light emitted from the laser diode chip 1, onto a medium (not illustrated), an optical separator or prism 21 for separating a light reflected from the medium, from an optical axis of a light directing to the lens from the laser diode chip 1, a photodiode chip 20 receiving a light separated from the optical axis by means of the prism 21, a grating 21j acting as a diffraction device and positioned in facing relation to the third outer surface 21c of the prism 21, a quarter wavelength plate 21i located in contact with the grating 21j, a reflection mirror 21k lying on an upper surface of the prism 21, and a lead frame 5 on which the sub-mount 2 and the photodiode chip 20 are mounted.

With reference to Fig. 24, the optical separator or prism 21 is a rectangular parallelopiped in shape defined by a first sidewall 21g and a second sidewall 21h in parallel with each other, and first, second, third and fourth outer surfaces 21a, 21b, 21c and 21d all perpendicular to both the first and second sidewalls 21g and 21h. The first and third outer surfaces 21a and 21c are in parallel with each other. The second outer surface 21b is perpendicular to the first outer surface 21a, and is in parallel with the fourth outer surface 21d.

The prism 21 is designed to have first and second inner planes 21e and 21f both perpendicular to the first and second sidewalls 21g and 21h, in parallel with one another, and both inclined relative to the first outer surface 21a at 45 degrees.

As illustrated in Fig. 26, the grating 21j is formed with stripes in grid, defined by lines extending in parallel with a x-axis and spaced away from adjacent ones by almost the same spacing as a wavelength of a light emitted from the laser diode chip 1.

It is not always necessary for the grating 21j to be integral with the prism 21. The grating 21j may be positioned anywhere in an optical path between the prism 21 and the quarter wavelength plate 21i.

The quarter wavelength plate 21i converts a light having emitted from the grating 21j of the prism 21 to a circularly polarized light from a linearly polarized light, and also converts a light having been reflected from the medium from a circularly polarized light to a linearly polarized light having an orientation perpendicular to an original orientation.

The quarter wavelength plate 21i may be integral with the prism 21, or may not be integral with the prism 21. The quarter wavelength plate 21i may be positioned anywhere in an optical path between the grating 21j and the medium.

The photodiode chip 20 has a light-receiving plane 20a in parallel with the second outer surface 21b. As illustrated in Fig. 25, a rear light-receiving section 20b, a front light-receiving section 20i and a monitor light-receiving section 20p are formed on the light-receiving plane 20a.

A light having been emitted from the laser diode chip 1 is partially reflected at the second inner plane 21f of the prism 21, reflected at the reflection mirror 21k, and forms a beam spot 20s on the photodiode chip 20. The monitor light-receiving section 20p is formed in association with the beam spot 20s.

Since the reflection mirror 21k is comprised of a concave mirror uniform in a z-axis direction, the reflection mirror 21k can be readily fabricated and mounted on the prism 21.

However, the reflection mirror 21k has light-converging function only in a z-axis direction, and does not have light-converging function in a x-axis direction, resulting in that the beam spot 20s extends in a x-axis direction. Thus, by designing the reflection mirror 21k to have a concave mirror facing in a x-axis direction, it would be possible to converge lights in a x-axis direction.

It is not always necessary to render the reflection mirror 21k to be integral with the prism 21. However, if they are formed integral with each other, the reflection mirror 21k can be readily positioned relative to the prism 21. The reflection mirror 21k may be replaced with the diffraction type light-converging device used in the first to third embodiments.

A light reflected at the medium passes through the prism 21, and reaches the photodiode chip 20 as follows.

A light having passed through the second inner plane 21f, and reflected at the first inner plane 21e forms beam spots 20qa, 20qb and 20qc on the photodiode chip 20. A light having been reflected at the second inner plane 21f forms beam spots 20ra, 20rb and 20rc on the photodiode chip 20. The rear and front light-receiving sections 20b and 20i are formed in correspondence with the beam spots 20qa to 20qc and 20ra to 20rc, respectively. The beam spots 20qa, 20qc, 20rb and 20rc are formed by lights having been diffracted by the grating 21j.

As illustrated in Fig. 25, the front light-receiving section 20i is comprised of three light-receiving sections 20j, 20k and 20l partitioned by two partition lines optically parallel to a radial direction of the medium, two light-receiving sections 20m and 20n partitioned by a partition line optically parallel to a tangential direction of the medium, and a light-receiving section 20o. Similarly, the rear light-receiving section 20b is comprised of three light-receiving sections 20c, 20d and 20e partitioned by two partition lines optically parallel to a radial direction of the medium, two light-receiving sections 20f and 20g partitioned by a partition line optically parallel to a tangential direction of the medium, and a light-receiving section 20h.

The laser diode chip 1 is positioned so that an optical path length between the laser diode chip 1 and the first inner plane 21e is equal to $(a + b - c)/2$ wherein "a" indicates an optical path length between the first inner plane 21e and the rear light-receiving section 20b, "b" indicates an optical path length between the second inner plane 21f and the front light-receiving section 20i, and "c" indicates an optical path length between the first and second inner planes 21e and 21f.

The optical head in accordance with the fourth embodiment operates as follows.

A light emitted from the laser diode chip 1 and polarized in a y-axis direction enters the prism 21 through the first outer surface 21a so that an optical axis thereof is perpendicular to the first outer surface 21a. The light is reflected at the second inner plane 21f by a couple of percents, and leaves the prism 21 at the third outer surface 21c with an optical axis thereof being perpendicular to the third outer surface 21c. The light having been reflected at the second inner plane 21f by a couple of percents leaves the prism 21 through the fourth outer surface 21d, is reflected at the reflection mirror 21k, and enters the prism 21 again through the fourth outer surface 21d. Then, the light passes through the second inner plane 21f, leaves the prism 21 through the second outer surface 21b, enters the photodiode chip 20, and is received in the monitor light-receiving section 20p.

A quantity of a light emitted from the laser diode chip 1 varies with the lapse of time and in dependence on a temperature, but can be controlled to a desired quantity by virtue of a signal detected in the monitor light-receiving section 20p.

By forming a light-receiving section with the sub-mount 2, it would be possible to measure a quantity of a light emitted from the laser diode chip 1 at the rear thereof. However, since a ratio between quantities of lights emitted from the laser diode chip 1 at the front and rear thereof varies while the optical head is in operation, it is preferable to measure a quantity of a light emitted from the laser diode chip 1 at the front thereof which light is used for actual reproduction of data.

There may be employed a photodiode chip in place of the reflection mirror 21k.

The reflection mirror 21k may be sealed into a package which is a protector of the optical head from moisture and dust. Since the reflection mirror 21k is integral with the package, the reflection mirror 21k does not constitute a hindrance for making the optical head thin.

The light having passed through the grating 21k is converted into a circularly polarized light in the quarter wavelength plate 21i, and focused onto the medium through the lens (not illustrated).

The light having been reflected by the medium advances on the same optical path in an opposite direction, and is converted by the quarter wavelength plate 21i into a light polarized in an x-axis direction, and then, is divided into a diffracted light and a transmitted light at the grating 21j.

The diffracted and transmitted lights is reflected at the second inner plane 21f by half, and the remaining half of the lights passes through the second inner plane 21f.

The light having been reflected at the second inner plane 21f leaves the prism 21 through the second outer surface 21b, enters the photodiode chip 20, and is received in the front light-receiving section 20i.

The light having passed through the second inner plane 21f is reflected at the first inner plane 21e. Then, the light leaves the prism 21 at the second outer surface 21b, enters the photodiode chip 20, and is received in the rear light-receiving section 20b.

A focus error signal FE20 is calculated in accordance with the following equation, based on signals S20b to S20o detected at the light-receiving sections 20b to 20o formed on the light-receiving plane 20a of the photodiode chip 20.

$$FE20 = (S20c - S20d + S20e) - (S20j - S20k + S20l)$$

A track error signal TE20 is calculated by a push pull process in accordance with the following equation.

$$TE20 = (S20f + S20n) - (S20g + S20m)$$

A signal indicative of data to be reproduced can be obtained as a sum of signals S20h and S20o (S20h + S20o).

In accordance with the fourth embodiment, even if the laser diode chip 1 and photodiode chip 20 are deviated in a x-axis direction because of an error in assembly, there is not generated track offset, because the beam spots 20qb and 20rb are uniformly deviated.

In addition, the focus track error signal is not influenced at all, because the light-receiving sections 20c to 20e and 20j to 20l do not have a division line parallel to a z-axis.

Even if the grating 21k is deviated in an x- or y-axis direction, since the grating 21k is not divided into areas, there is generated no track offset and no focus offset.

In the grating 21k, if an oscillation wavelength of the laser diode chip 1 varies due to variation in a temperature, for instance, a diffraction angle of a diffracted light also varies, resulting in that the beam spots 20qb to 20qc and 20rb to 20rc are deviated in a z-axis direction. However, since any one of the beam spots 20qb to 20qc and 20rb to 20rc is not across a plurality of the light-receiving sections in a z-axis direction, the optical head in accordance with the fourth embodiment is not influenced by variation in a diffraction angle.

The first and second inner planes 21e and 21f in the prism 21 are inclined by 45 degrees relative to the first outer surface 21a, and the photodiode chip 20 is inclined by 90 degrees relative to the first outer surface 21a. Hence, even if the sub-mount 2 had a thickness different from a designed thickness, and resultingly, a light-emission point of the laser diode chip 1 is deviated in a y-axis direction relative to the photodiode chip 20, a relative positional relation in a direction of an optical path between the laser diode chip 1 and the photodiode chip 20 is not varied, which ensures no focus offset caused by deviation in relative positional relation between them.

In the optical head in accordance with the fourth embodiment, the laser diode chip 1 is positioned such that an optical path length between the laser diode chip 1 and the first inner plane 21e is equal to $(a + b-c)/2$ wherein "a" indicates an optical path length between the first inner plane 21e and the rear light-receiving section 20b, "b" indicates an optical path length between the second inner plane 21f and the front light-receiving section 20i, and "c" indicates an optical path length between the first and second inner planes 21e and 21f. Hence, when the medium is located at a light-converging point of the lens, a light having been reflected at the medium is focused onto a point which is at the rear of the front light-receiving section 20i and in front of the rear light-receiving section 20b and at which an optical path length L is equal to $(a-b + c)/2$. Accordingly, an optical path length a between an optical axis of a light emitted from the laser diode chip 1 and the light-receiving plane 20a of the photodiode chip 20 is equal to $(2L + b-c)$.

In the first conventional optical head, an optical path length $(c + a)$ between an optical axis of a light emitted from the laser diode chip 101 and the light-receiving plane 103a of the photodiode chip 103 is equal to (2F + b), wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b.

If the focus error signal had too low sensitivity, it would be difficult to keep a medium within a depth of focus of a lens by means of a servo. On the other hand, if the focus error signal had too high sensitivity, an optical head had to be assembled with small tolerance. Hence, there exists optimal sensitivity. This optimal sensitivity is determined in dependence on the above-mentioned optical path length L and F. Comparing the optical head in accordance with the fourth embodiment to the first conventional optical head under the condition that sensitivities of the focus error signals are equal to each other, that is, L is equal to F, the optical head in accordance with the fourth embodiment can be formed thinner than the conventional optical head.

In the optical head in accordance with the fourth embodiment, when the grating 21j had a diffraction efficiency equal to or greater than 25%, a ratio of a quantity of a light to be received at the light-receiving sections 20h and 20o to a quantity of a light reflected at the medium is over 25%. Hence, it is possible to enhance a quality of a signal indicative of data to be reproduced.

In accordance with the present embodiment, since the grating 21j is not divided into areas, there is not formed a plurality of beam spots. Hence, it is possible to prevent a stray light caused by flaw of a medium from entering the optical head which stray light is generally caused when a light-receiving plane is entirely covered with light-receiving sections, prevent deterioration in productivity of a diffraction device which deterioration is generally caused when a spacing between adjacent light-receiving sections becomes greater and hence, a spacing between gratings in a diffraction device unavoidably becomes smaller, and prevent deterioration in a resistance against fluctuation in a wavelength of a light source.

In the present embodiment, the focus error signal FE20 is detected as variation in a size of the beam spots 20qa and 20ra in a z-axis direction. Thus, components of the track error signal are expressed as variation in a profile of light quantity in the beam spots 20qa and 20ra in an x-axis direction. As a result, the track error signal component is unlikely to be mixed to the focus error signal FE20.

It would be possible to detect the focus error signal, the track error signal and the signal indicative of data to be reproduced in other methods by replacing the photothode chip 20 with another photodiode chip.

**[Example of Fourth Embodiment]**

The grating 21j may be comprised of a device composed of lithium niobate crystal on which grid-like stripes are formed in dependence on whether proton is exchanged or not. Namely, the grating 21k utilizes the fact that an index ellipsoid is deformed, if proton exchange is applied to lithium niobate crystal. A phase difference between dielectric films deposited on a region to which proton exchange is applied, and a portion to which proton exchange is not applied is multiplied by Nπ for a light polarized in a y-axis direction, and set to be an appropriate value for a light polarized in a x-axis direction, wherein N is an even integer. As a result, the grating 21k can be designed to allow a light polarized in a y-axis direction to pass therethrough, and a light polarized in an x-axis direction to diffract and pass therethrough.

In the present embodiment illustrated in Fig. 23, the sub-mount 2 is fixed on the lead frame 5. By designing the optical head to have the same structure as that of the example of the first embodiment illustrated in Fig. 12, it would be possible to fix the sub-mount 2 on the photothode chip 20.

Though bonding wires 6 are illustrated only for electrically connecting the laser diode chip 1 to the lead frame 5 and electrically connecting the photodiode chip 20 to the lead frame 5, bonding wires 6 are used in other sites where electrical connection is necessary to be made.

In the optical heads illustrated in Fig. 23, since the photodiode chip 20 is sandwiched between the prism 21 and the lead frame 5, it is not possible to lastly fix the photodiode chip 20. However, by designing the optical head to have the same structure as that of the example of the first embodiment, illustrated in Fig. 13, the photodiode chip 20 can be lastly fixed.

As the lens to be used in the fourth embodiment, there may be used a single finite lens or a combination of a collimate lens and an objective lens. The combination may include a beam splitter located between the collimate lens and the objective lens for separating a light directing to the medium from the laser diode chip 1, or a light directing to the photodiode chip 20 from the medium. This ensures these lights to be parallel lights in the case that the medium is located on a light-converging point of an objective lens. Hence, these lights could be readily dealt with.

The medium mentioned in the fourth embodiment includes an optical disc, an optical tape and the like, and is composed of phase-change material or photo-electro-magnetic material, for instance.

**[Fifth Embodiment]**

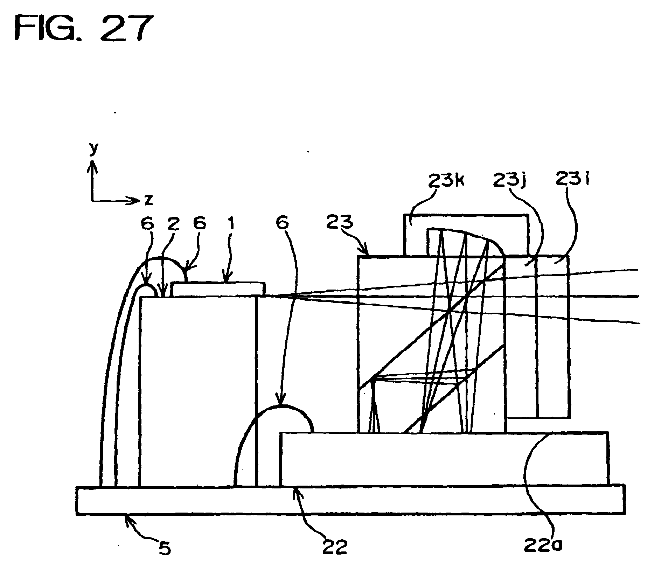

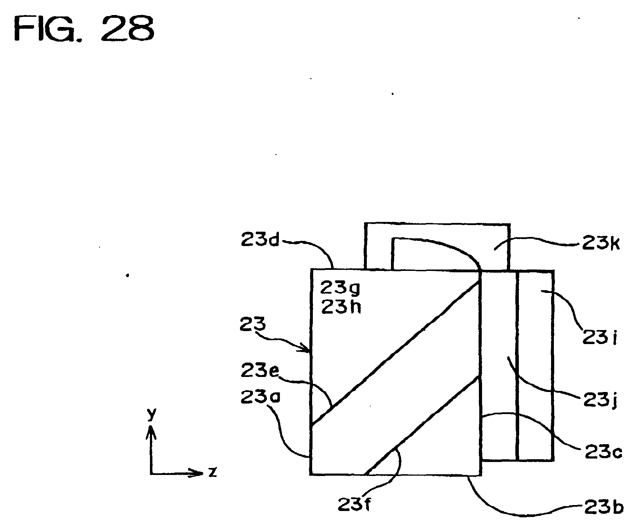

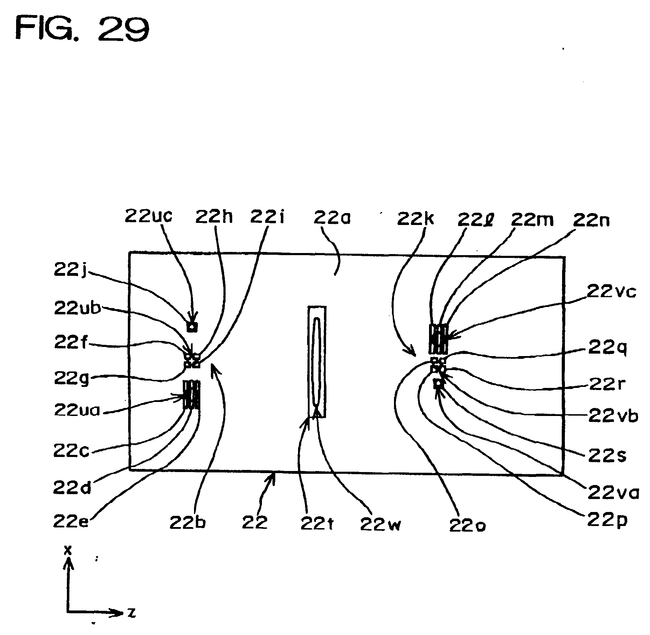

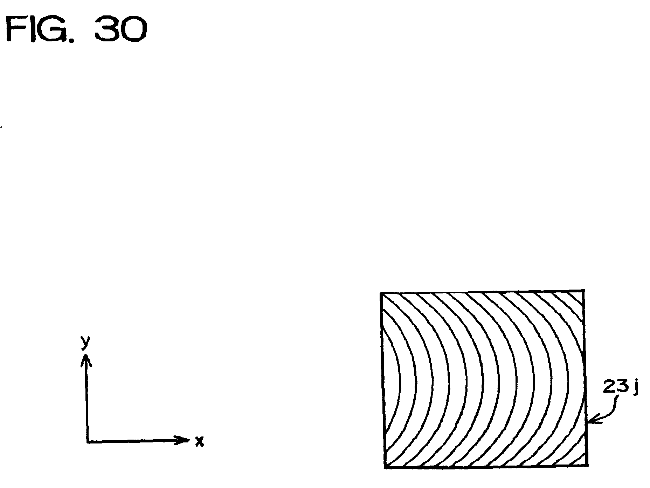

Figs. 27 to 29 illustrate an optical head in accordance with the fifth embodiment of the present invention. Fig. 27 is a front view of the optical head, Fig. 28 is a front view of the prism used in the optical head, Fig. 29 is a plan view of the photodiode chip used in the optical head, and Fig. 30 is a right side view of a hologram used in the optical head.

With reference to Fig. 27, the optical head in accordance with the fifth embodiment is comprised of a laser diode chip 1, a sub-mount 2 on which the laser diode chip 1 is mounted and which keeps the laser diode chip 1 at a predetermined height, a lens (not illustrated) for focusing a light emitted from the laser diode chip 1, onto a medium (not illustrated), an optical separator or prism 23 for separating a light reflected from the medium, from an optical axis of a light directing to the lens from the laser diode chip 1, a photodiode chip 22 receiving a light separated from the optical axis by means of the prism 23, a hologram 23j acting as a diffraction device and positioned in facing relation to the third outer surface 23c of the prism 23, a quarter wavelength plate 23i located in contact with the hologram 23j, a reflection mirror 23k lying on an upper surface of the prism 23, and a lead frame 5 on which the sub-mount 2 and the photodiode chip 22 are mounted.

With reference to Fig. 28, the optical separator or prism 23 is a rectangular parallelopiped in shape defined by a first sidewall 23g and a second sidewall 23h in parallel with each other, and first, second, third and fourth outer surfaces 23a, 23b, 23c and 23d all perpendicular to both the first and second sidewalls 23g and 23h. The first and third outer surfaces 23a and 23c are in parallel with each other. The second outer surface 23b is perpendicular to the first outer surface 23a, and is in parallel with the fourth outer surface 23d.

The prism 23 is designed to have first and second inner planes 23e and 23f both perpendicular to the first and second sidewalls 23g and 23h, in parallel with one another, and both inclined relative to the first outer surface 23a at 45 degrees.

As illustrated in Fig. 30, the hologram 23j is formed with stripes in grid, defined by curves spaced away from adjacent ones by a spacing almost equal to a wavelength of a light emitted from the laser diode chip 1. The stripes makes a light-converging point of a positive first-order diffraction light forwardly close to a light-converging point of a transmitted light by M, that is, makes a light-converging point of a negative first-order diffraction light backwardly far away from a light-converging point of a transmitted light by M, wherein M is a positive number (M>0).

It is not always necessary for the hologram 23j to be integral with the prism 23. The hologram 23j may be positioned anywhere in an optical path between the prism 23 and the quarter wavelength plate 23i.

The quarter wavelength plate 23i converts a light having emitted from the hologram 23j of the prism 23 to a circularly polarized light from a linearly polarized light, and also converts a light having been reflected from the medium from a circularly polarized light to a linearly polarized light having an orientation perpendicular to an original orientation.

The quarter wavelength plate 23i may be integral with the prism 23, or may not be integral with the prism 23. The quarter wavelength plate 23i may be positioned anywhere in an optical path between the grating 23j and the medium.

The photodiode chip 22 has a light-receiving plane 22a in parallel with the second outer surface 23b. As illustrated in Fig. 29, a rear light-receiving section 22b, a front light-receiving section 22k and a monitor light-receiving section 22t are formed on the light-receiving plane 22a.

A light having been emitted from the laser diode chip 1 is partially reflected at the first inner plane 23e of the prism 23, reflected at the reflection mirror 23k, and forms a beam spot 22w on the photodiode chip 22. The monitor light-receiving section 22t is formed in association with the beam spot 22w.

Since the reflection mirror 23k is comprised of a concave mirror uniform in a z-axis direction, the reflection mirror 23k can be readily fabricated and mounted on the prism 23.

However, the reflection mirror 23k has light-converging function only in a z-axis direction, and does not have light-converging function in a x-axis direction, resulting in that the beam spot 20w extends in a x-axis direction. Thus, by designing the reflection mirror 23k to have a concave mirror facing in a x-axis direction, it would be possible to converge lights in a x-axis direction.

It is not always necessary to render the reflection mirror 23k to be integral with the prism 23. However, if they are formed integral with each other, the reflection mirror 23k can be readily positioned relative to the prism 23.

The reflection mirror 23k may be replaced with the diffraction type light-converging device used in the first to third embodiments.

A light reflected at the medium passes through the prism 23, and reaches the photodiode chip 22 as follows.

A light having been reflected at the first inner plane 23e, reflected at the second inner plane 23f, and reflected again at the first inner plane 23e forms beam spots 22ua, 22ub and 22uc on the photodiode chip 22. A light having been reflected at the first inner plane 23e and having passed through the second inner plane 23f forms beam spots 22va, 22vb and 22vc on the photodiode chip 22. The rear and front light-receiving sections 22b and 22k are formed in correspondence with the beam spots 22ua to 22uc and 22va to 22vc, respectively. The beam spots 22ua, 22uc, 22va and 22vc are formed by lights having been diffracted by the hologram 23j.

Interference fringes are formed on the hologram 23j. Assuming that a first point light source is located at a light emission point of the laser diode chip 1, and a second point light source is located at a point at which positive first-order diffracted lights of the hologram 23j are to be converged when the medium is located at a light-converging point of the lens, the interference fringes are defined by both a light emitted from the first point light source, and a light emitted from the second point light source, reflected at the first and second inner planes 23e and 23f, and reflected again at the first inner plane 23e.

As illustrated in Fig. 29, the front light-receiving section 22k is comprised of three light-receiving sections 22l, 22m and 22n partitioned by two partition lines optically parallel to a radial direction of the medium, four light-receiving sections 22o, 22p, 22q and 22r partitioned by two partition lines optically parallel to tangential and radial directions of the medium, and a light-receiving section 22s. Similarly, the rear light-receiving section 22b is comprised of three light-receiving sections 22c, 22d and 22e partitioned by two partition lines optically parallel to a radial direction of the medium, four light-receiving sections 22f, 22g, 22h and 22i partitioned by two partition lines optically parallel to tangential and radial directions of the medium, and a light-receiving section 22j.

The laser diode chip 1 is positioned so that an optical path length between the laser diode chip 1 and the first inner plane 23e is equal to ( a + b + 3c ) /2 wherein "a" indicates an optical path length between the first inner plane 23e and the rear light-receiving section 22b, "b" indicates an optical path length between the second inner plane 231 and the front light-receiving section 22k, and "c" indicates an optical path length between the first and second inner planes 23e and 23f.

The optical head in accordance with the fifth embodiment operates as follows.

A light emitted from the laser diode chip 1 and polarized in a y-axis direction enters the prism 23 through the first outer surface 23a so that an optical axis thereof is perpendicular to the first outer surface 23a. The light is reflected at the first inner plane 23e by a couple of percents, and leaves the prism 23 at the third outer surface 23c with an optical axis thereof being perpendicular to the third outer surface 23c. The light having been reflected at the first inner plane 23e by a couple of percents leaves the prism 23 through the fourth outer surface 23d, is reflected at the reflection mirror 23k, and enters the prism 23 again through the fourth outer surface 23d. Then, the light passes through the first and second inner planes 23e and 23f, leaves the prism 23 through the second outer surface 23b, enters the photodiode chip 22, and is received in the monitor light-receiving section 22t.

A quantity of a light emitted from the laser diode chip 1 varies with the lapse of time and in dependence on a temperature, but can be controlled to a desired quantity by virtue of a signal detected in the monitor light-receiving section 22t.

By forming a light-receiving section with the sub-mount 2, it would be possible to measure a quantity of a light emitted from the laser diode chip 1 at the rear thereof. However, since a ratio between quantities of lights emitted from the laser diode chip 1 at the front and rear thereof varies while the optical head is in operation, it is preferable to measure a quantity of a light emitted from the laser diode chip 1 at the front thereof which light is used for actual reproduction of data.

There may be employed a photodiode chip in place of the reflection mirror 23k.

The reflection mirror 23k may be sealed into a package which is a protector of the optical head from moisture and dust. Since the reflection mirror 23k is integral with the package, the reflection mirror 23k does not constitute a hindrance for making the optical head thin.

The light having passed through the hologram 23k is converted into a circularly polarized light in the quarter wavelength plate 23i, and focused onto the medium through the lens (not illustrated).

The light having been reflected by the medium advances on the same optical path in an opposite direction, and is converted by the quarter wavelength plate 23i into a light polarized in an x-axis direction, and then, is divided into a diffracted light and a transmitted light at the hologram 23j.

The diffracted and transmitted lights are reflected at the first inner plane 23e, and further reflected at the second inner plane 23f by half, and the remaining half of the lights passes through the second inner plane 23f.

The light having been reflected at the second inner plane 23f is reflected again at the first inner plane 23e, leaves the prism 23 through the second outer surface 23b, enters the photodiode chip 22, and is received in the rear light-receiving section 22b.

The light having been reflected at the first inner plane 23e and passed through the second inner plane 23f leaves the prism 23 through the second outer surface 23b, enters the photodiode chip 22, and is received in the front light-receiving section 22k.

A focus error signal FE22 is calculated in accordance with the following equation, based on signals S22b to S22s detected at the light-receiving sections 22b to 22s formed on the light-receiving plane 22a of the photodiode chip 22.

$$FE22 = (S22c - S22d + S22e) - (S22l - S22m + S22n)$$

A track error signal TE22 is calculated by a push pull process in accordance with the following equation.

$$TE22 = (S22f + S22h + S22p + S22r) - (S22g + S22i + S22o + S22q)$$

The track error signal TE22 can be calculated also by a phase difference process or heterodyne process as follows.

$$TE22 = \text{Phase difference between } (S22f + S22i + S22o + S22r) \text{ and } (S22g + S22h + S22p + S22q)$$

A signal indicative of data to be reproduced can be obtained as a sum of signals S22j and S22s (S22j + S22s).

In accordance with the fifth embodiment, even if the laser diode chip 1 and photodiode chip 22 are deviated in a x-axis direction because of an error in assembly, there is not generated track offset, because the beam spots 22ub and 22vb are uniformly deviated.

In addition, the focus track error signal is not influenced at all, because the light-receiving sections 20c to 20e and 20l to 20n do not have a division line parallel to a z-axis.

In the hologram 23j, if an oscillation wavelength of the laser diode chip 1 varies due to variation in a temperature, for instance, a diffraction angle of a diffracted light also varies, resulting in that the beam spots are deviated in a x-axis direction. However, since any one of the beam spots 22ua, 22uc, 22va and 22vc is not across a plurality of the light-receiving sections in a x-axis direction, the optical head in accordance with the fifth embodiment is not influenced by variation in a diffraction angle.

The first and second inner planes 23e and 23f in the prism 23 are inclined by 45 degrees relative to the first outer surface 23a, and the photodiode chip 22 is inclined by 90 degrees relative to the first outer surface 23a. Hence, even if the sub-mount 2 had a thickness different from a designed thickness, and resultingly, a light-emission point of the laser diode chip 1 is deviated in a y-axis direction relative to the photodiode chip 22, a relative positional relation in a direction of an optical path between the laser diode chip 1 and the photodiode chip 22 is not varied, which ensures no focus offset caused by deviation in relative positional relation between them.

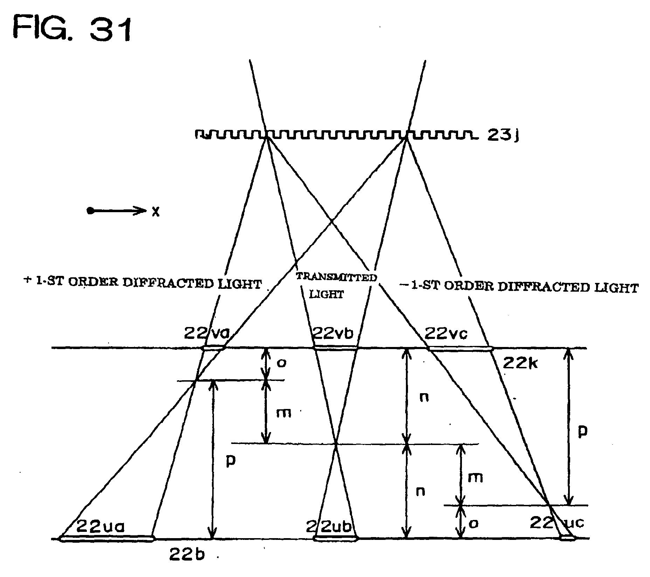

Fig. 31 illustrates optical paths of a light reflected at a medium and passing through the hologram 23j and a light diffracted at the hologram 23j in the case that the medium is located at a light-converging point of the lens.

In the optical head in accordance with the fifth embodiment, the laser diode chip 1 is positioned such that an optical path length between the laser diode chip 1 and the first inner plane 23e is equal to $(a + b + 3c)/2$ wherein "a" indicates an optical path length between the first inner plane 23e and the rear light-receiving section 22b, "b" indicates an optical path length between the second inner plane 23f and the front light-receiving section 22k, and "c" indicates an optical path length between the first and second inner planes 23e and 23f.

Hence, when the medium is located at a light-converging point of the lens, a light having passed through the hologram 23j is focused onto a point which is at the rear of the front light-receiving section 22k and in front of the rear light-receiving section 22b and at which an optical path length N is equal to $(a - b + c)/2$. A positive first-order light having been diffracted at the hologram 23j is focused onto a point at which an optical path length O behind the front light-receiving section 22k is equal to (N-M), that is, a point at which an optical path length P in front of the rear light-receiving section 22b is equal to (N+M). A negative first-order light having been diffracted at the hologram 23j is focused onto a point at which an optical path length P behind the front light-receiving section 22k is equal to (N+M), that is, a point at which an optical path length O in front of the rear light-receiving section 22b is equal to (N-M). Accordingly, an optical path length (c + a) between an optical axis of a light emitted from the laser diode chip 1 and the light-receiving plane 22a of the photodiode chip 22 is equal to $2(P - M) + b$.

In the first conventional optical head, an optical path length (c + a) between an optical axis of a light emitted from the laser diode chip 101 and the light-receiving plane 103a of the photodiode chip 103 is equal to (2F + b), wherein "a" indicates an optical path length between the first inner plane 104e and the rear light-receiving section 103b, "b" indicates an optical path length between the second inner plane 104f and the front light-receiving section 103f, "c" indicates an optical path length between the first and second inner planes 104e and 104f, and "F" indicates an optical path length between a point at which a light having been reflected at a medium is converged when a medium is located at a light-converging point of a lens, and the front light-receiving section 103f or the rear light-receiving section 103b.

If the focus error signal had too low sensitivity, it would be difficult to keep a medium within a depth of focus of a lens by means of a servo. On the other hand, if the focus error signal had too high sensitivity, an optical head had to be assembled with small tolerance. Hence, there exists optimal sensitivity. This optimal sensitivity is determined in dependence on the above-mentioned optical path length P and F. Comparing the optical head in accordance with the fifth embodiment to the first conventional optical head under the condition that sensitivities of the focus error signals are equal to each other, that is, L is equal to P, the optical head in accordance with the fifth embodiment can be formed thinner than the conventional optical head.

Fig. 31 illustrates optical paths of a light reflected at the medium and passing through the hologram 23j and a light diffracted at the hologram 23j in the case that the medium is located at a light-converging point of the lens in the present embodiment. Fig. 31 illustrates a case wherein M is smaller than N (M <N), however, M may be set equal to or greater than N (M≧N).

In the optical head in accordance with the present embodiment, when the hologram 23j had a diffraction efficiency equal to or greater than 25%, a ratio of a quantity of a light to be received at the light-receiving sections 22j and 22s to a quantity of a light reflected at the medium is over 25%. Hence, it is possible to enhance a quality of a signal indicative of data to be reproduced.

In the present embodiment, the beam spots 22uc and 22va are formed in a small circle. Hence, the light-receiving sections 22j and 22s can be formed small. Hence, even if an amplifier is equipped in the photodiode chip 22, it would be possible to detect a signal having a desired frequency, ensuring that the optical head can reproduce data at a high rate.

In accordance with the present embodiment, since the hologram 23j is not divided into areas, there is not formed a plurality of beam spots. Hence, it is possible to prevent a stray light caused by flaw of a medium from entering the optical head which stray light is generally caused when a light-receiving plane is entirely covered with light-receiving sections, prevent deterioration in productivity of a diffraction device which deterioration is generally caused when a spacing between adjacent light-receiving sections becomes greater and hence, a spacing between gratings in a diffraction device unavoidably becomes smaller, and prevent deterioration in a resistance against fluctuation in a wavelength of a light source.

In the present embodiment, the focus error signal FE22 is detected as variation in a size of the beam spots 22ua and 22vc in a z-axis direction. Thus, components of the track error signal are expressed as variation in a profile of light quantity in the beam spots 22ua and 22vc in an x-axis direction. As a result, the track error signal component is unlikely to be mixed to the focus error signal FE22.

It would be possible to detect the focus error signal, the track error signal and the signal indicative of data to be reproduced in other methods by replacing the photodiode chip 22 with another photodiode chip.

**[Example of Fifth Embodiment]**

The hologram 23j may be comprised of a device composed of lithium niobate crystal on which grid-like stripes are formed in dependence on whether proton is exchanged or not. Namely, the grating 21k utilizes the fact that an index ellipsoid is deformed, if proton exchange is applied to lithium niobate crystal. A phase difference between dielectric films deposited on a region to which proton exchange is applied, and a portion to which proton exchange is not applied is multiplied by Nπ for a light polarized in a y-axis direction, and set to be an appropriate value for a light polarized in a x-axis direction, wherein N is an even integer. As a result, the hologram 23j can be designed to allow a light polarized in a y-axis direction to pass therethrough, and a light polarized in an x-axis direction to diffract and pass therethrough.

In the present embodiment illustrated in Fig. 27, the sub-mount 2 is fixed on the lead frame 5. By designing the optical head to have the same structure as that of the example of the first embodiment illustrated in Fig. 12, it would be possible to fix the sub-mount 2 on the photodiode chip 22.

Though bonding wires 6 are illustrated only for electrically connecting the laser diode chip 1 to the lead frame 5 and electrically connecting the photodiode chip 22 to the lead frame 5, bonding wires 6 are used in other sites where electrical connection is necessary to be made.

In the optical heads illustrated in Fig. 27, since the photodiode chip 22 is sandwiched between the prism 23 and the lead frame 5, it is not possible to lastly fix the photodiode chip 22. However, by designing the optical head to have the same structure as that of the example of the first embodiment, illustrated in Fig. 13, the photodiode chip 22 can be lastly fixed.

As the lens to be used in the fourth embodiment, there may be used a single finite lens or a combination of a collimate lens and an objective lens. The combination may include a beam splitter located between the collimate lens and the objective lens for separating a light directing to the medium from the laser diode chip 1, or a light directing to the photodiode chip 22 from the medium. This ensures these lights to be parallel lights in the case that the medium is located on a light-converging point of an objective lens. Hence, these lights could be readily dealt with.

The medium mentioned in the fourth embodiment includes an optical disc, an optical tape and the like, and is composed of phase-change material or photo-electro-magnetic material, for instance.

**Claims**

1. An optical head comprising:

(a) a laser diode chip (1);

(b) a lens for focusing lights emitted from the laser diode chip (1), onto an object;

(c) an optical separator (4, 15, 19, 21, 23) for separating lights reflected from the object, from an optical axis of a light directing towards the lens from the laser diode chip (1); and

(d) a photodiode chip (3, 8, 14, 18, 20, 22) receiving lights having been separated from the optical axis by the optical separator (4, 15, 19, 21, 23),

the optical separator (4, 15, 19, 21, 23) being a square pole in shape defined by a first sidewall, a second sidewall in parallel with the first the wall, and first, second, third and fourth outer surfaces all perpendicular to both the first and second sidewalls, the first and third outer surfaces being in parallel with each other,

characterized by

the optical head further comprising a diffraction type light-converging device (4j, 15j, 19j),

the optical separator (4, 15, 19, 21, 23) having first and second inner planes both perpendicular to the first and second sidewalls and in parallel with each other, and both being inclined relative to the first outer surface at a predetermined angle,

the photodiode chip (3, 8, 14, 18, 20, 22) having a light-receiving plane in parallel with the second outer surface,

a light directing towards the lens from the laser diode chip (1), entering the first outer surface, passing through the first and second inner planes in this order, leaving the optical separator (4, 15, 19, 21, 23) at the third outer surface, and being focused onto the object by the lens,

the light having been reflected by the object, entering the third outer surface, being reflected at the second inner plane by $\delta$ %, and passing through the second inner plane by $(100 - \delta)$ % wherein $\delta$ is a positive number greater than zero, but smaller than 100 $(0 < \delta < 100)$,

the light having been reflected at the second inner plane, leaving the optical separator (4, 15, 19, 21, 23) at the second outer surface, and being received in a front light-receiving section (3l, 14f, 18f, 20i, 32k) formed on the light-receiving plane of the photodiode chip (3, 8, 14, 18, 20, 22),

the light being reflected at the first inner plane after having passed through the second inner plane, entering the second inner plane, being reflected at the second inner plane by $\delta$ %, and passing through the second inner plane by $(100 - \delta)$ %,

the light being reflected at the first inner plane after having been reflected at the second inner plane, leaving the optical separator (4, 15, 19, 21, 23) at the second outer surface, and being received in a rear light-receiving section (3b, 14b, 18b, 20b, 22b) formed on the light-receiving plane of the photodiode chip (3, 8, 14, 18, 20, 22),

a part of the light emitted from the laser diode chip (1) being reflected at the first and second inner planes, being reflected at the diffraction type light-converging device (4j, 15j, 19j), and being received in a monitor light-receiving section (3q, 14o, 18o, 20p, 22t) formed on the light-receiving plane of the photodiode chip (3, 8, 14, 18, 20, 22),

the laser diode chip (1) being positioned so that an optical path length between the laser diode chip (1) and the first inner plane is equal to a predetermined length defined by a, b and c wherein "a" indicates an optical path length between the first inner plane and the rear light-receiving section (3b, 14b, 18b, 20b, 22b), "b" indicates an optical path length between the second inner plane and the front light-receiving section (3l, 14f, 18f, 20i, 32k), and "c" indicates an optical path length between the first and second inner planes.

2. The optical head as set forth in claim 1, wherein the light having passed through the second inner plane leaves the optical separator (4, 15, 19, 21, 23) at the second outer surface, and is received in a central light-receiving section (3p, 14j, 18j) formed on the light-receiving plane of the photodiode chip (3, 8, 14, 18, 20, 22), and

the predetermined length is $(a + b + c)/2$ .

3. The optical head as set forth in claim 1, wherein the light having passed through the second inner plane leaves the optical separator (4, 15, 19, 21, 23) at the second outer surface, and is received in a central light-receiving section (3p, 14j, 18j) formed on the light-receiving plane of the photodiode chip (3, 8, 14, 18, 20, 22), and

the predetermined length E is defined by the following conditions.

$$E \neq (a + b + c)/2 \text{ and } (b - c) < E < (a + 2c)$$

4. The optical head as set forth in claim 1, wherein the light having passed through the second inner plane leaves the optical separator (4, 15, 19, 21, 23) at the second outer surface, and is received in a central light-receiving section (3p, 14j, l8j) formed on the light-receiving plane of the photodiode chip (3, 8, 14, 18, 20, 22),

the optical separator is comprised of a prism (4, 15, 19, 21, 23) and a diffraction device (19k, 21j, 23j),

the light having been reflected by the object is separated into a transmitted light and a diffracted light by the diffraction device (19k, 21j, 23j), and

the predetermined length is $(a + b + c)/2$ .

5. The optical head as set forth in claim 1, wherein the optical separator (4, 15, 19, 21, 23) is comprised of a prism (4, 15, 19, 21, 23) and a diffraction device (19k, 21j, 23j) not divided into areas,

the light having been reflected by the object is separated into a transmitted light and a diffracted light by the diffraction device,
the $\delta$ is equal to 50, and
the predetermined length is $(a + b-c)/2$ .

6. The optical head as set forth in claim 1, wherein the optical separator (4, 15, 19, 21, 23) is comprised of a prism and a diffraction device (19k, 21j, 23j) not divided into areas,

the light directing towards the lens from the laser diode chip (1) passes through only the first inner plane,
the light having been reflected by the object is separated into a transmitted light and a diffracted light by the diffraction device (19k, 21j, 23j),
the $\delta$ is equal to 50, and
the predetermined length is $(a + b + 3c)/2$ .

7. The optical head as the forth in any one of claims 1 to 4, wherein a ratio of an amplification factor of a signal detected at the front light-receiving section (3l, 14f, 18f, 20i, 32k) to an amplification factor of a signal detected at the rear light-receiving section (3b, 14b, 18b, 20b, 22b) is equal to $(100 - \delta) : 100$.

8. The optical head as the forth in claim 7, wherein $\delta$ is set to be smaller than 50 ($\delta < 50$).

9. The optical head as the forth in any one of claims 1 to 6, wherein the diffraction type light-converging device (4j, 15j, 19j) is comprised of a first region and a second region,

on the assumption that a first point light source is positioned on a first line passing through a center of the monitor light-receiving section (3q, 14o, 18o, 20p, 22t) and extending in parallel with an x-axis, and that a second point light source is positioned on a second line passing through a light-emission point of the laser diode chip (1) and extending in parallel with an x-axis,
the first region having a saw-shaped cross-section in correspondence with interference fringes defined by a light emitted from the first point light source and a light emitted from the second point light source and reflected at the first inner plane,
the second region having a saw-shaped cross-section in correspondence with interference fringes defined by a light emitted from the first point light source and a light emitted from the second point light source and reflected at the second inner plane.

10. The optical head as the forth in claim 9, wherein the saw-shaped cross-section meets with Bragg's conditions.

11. The optical head as the forth in claim 9, wherein the saw-shaped cross-section is a rectangular cross-section.

12. The optical head as the forth in any one of claims 1 to 6, wherein the diffraction type light-converging device (4j, 15j, 19j) is formed integral with the optical separator (4, 15, 19, 21, 23).

13. The optical head as the forth in any one of claims 1 to 6, further comprising a sub-mount (2) on which the laser diode chip (1) is to be mounted, the sub-mount (2) being mounted on the photodiode chip (3, 8, 14, 18, 20, 22).

14. The optical head as the forth in any one of claims 1 to 6, wherein the laser diode chip (1) is supported only at an upper portion thereof.

15. The optical head as the forth in claim 14, further comprising a plate (10) supported on an upper surface of the optical separator (4, 15, 19, 21, 23), the laser diode chip (1) being supported at a lower surface of the plate (10).

16. The optical head as the forth in any one of claims 1 to 6, wherein the optical head includes a reflection mirror (21k, 23k) in place of the diffraction type light-converging device (4j, 15j, 19j).

17. The optical head as the forth in claim 16, wherein the reflection mirror (21k, 23k) has two concave mirrors in two directions perpendicular to each other.

18. The optical head as the forth in any one of claims 4 to 6, wherein the diffraction device (19k, 21j, 23j) converges a diffracted light generated by the diffraction device (19k, 21j, 23j) itself and having an order of one of signs, and scattered a diffracted light generated by the diffraction device (19k, 21j, 23j) itself and having an order of the other.

# FIG. 1
### PRIOR ART

# FIG. 2

**PRIOR ART**

# FIG. 3
## PRIOR ART

# FIG. 4

PRIOR ART

y
z

102  101  106e  106  106f  106d  106c  107

106a

45°

90°

106b  108

106i

105  105a

# FIG. 5

PRIOR ART

# FIG. 6

PRIOR ART

y

x

107b       107a

107

# FIG. 7
PRIOR ART

# FIG. 8

FIG. 9

# FIG. 10

# FIG. 11

4j

y

z

x

4ja

4jb

# FIG. 12

FIG. 13

# FIG. 14

# FIG. 15

# FIG. 16

# FIG. 17

15j

15ja

15jb

y
z
x

# FIG. 18

FIG. 19

# FIG. 20

# FIG. 21

19j

y

z

x

19ja

19jb

# FIG. 22

# FIG. 23

# FIG. 24

# FIG. 25

# FIG. 26

y

x

21j

FIG. 27

# FIG. 28

# FIG. 29

22uc  22h  22i  22a  22k  22ℓ  22m  22n

22j

22ub

22f

22g

22ua

22c

22d

22e

22vc

22q

22r

22vb

22s

22va

22p

22b  22  22t  22w  22o

X

Z

# FIG. 30

## FIG. 31